# EUROPEAN PATENT SPECIFICATION

(11) **EP 3 069 255 B1**
(45) Date of publication and mention of the grant of the patent: **15.04.2020**
(21) Application number: 14862170.9
(22) Date of filing: 14.11.2014
(51) Int. Cl.: G06F 13/14

(54) **METHOD AND APPARATUS FOR CONNECTING COMMUNICATION OF ELECTRONIC DEVICES**
VERFAHREN UND VORRICHTUNG ZUR KOMMUNIKATIONSVERBINDUNG ELEKTRONISCHER VORRICHTUNGEN
PROCÉDÉ ET APPAREIL PERMETTANT DE FAIRE COMMUNIQUER DES DISPOSITIFS ÉLECTRONIQUES

(30) Priority: 14.11.2013 KR 20130138354
(43) Date of publication of application: 21.09.2016
(73) Proprietor: Samsung Electronics Co., Ltd., Suwon-si, Gyeonggi-do 443-742 (KR)
(72) Inventor: HEO, Chang-Ryong, Suwon-si Gyeonggi-do 441-390 (KR); LEE, Kyung-Hee, Ansan-si Gyeonggi-do 426-767 (KR); CHO, Chi-Hyun, Suwon-si Gyeonggi-do 443-793 (KR); PARK, Ken-Hyung, Suwon-si Gyeonggi-do 442-703 (KR)
(74) Representative: HGF Limited
(86) International application number: PCT/KR2014/010971
(87) International publication number: WO 2015/072783

(56) References cited:
- EP-A1- 1 712 047
- EP-A1- 2 610 708
- US-A1- 2005 021 679
- US-A1- 2006 255 963
- US-A1- 2011 245 633
- US-A1- 2012 030 043
- US-A1- 2013 281 816

## Description

### Technical Field

The present disclosure relates to a method for connecting communication of electronic device. More particularly, the present disclosure relates to a method and apparatus for connecting communication of a plurality of electronic devices.

### Background Art

Electronic devices equipped with a convergence function of complexly performing one or more functions are increasingly used in recent years. Mobile terminals known as "smartphones" are the representatives of the electronic devices. A mobile terminal may include a display module with a large touch screen and a high pixel camera module in addition to basic functions of communicating with others. A camera module allows the mobile terminal to photograph a still image or a moving image. In addition, a mobile terminal is able to reproduce multimedia content such as music, video, etc., and is able to access a network to browse the web. Such a mobile terminal has been enhanced to be able to perform a variety of convergence functions with the inclusion of a high performance processor.

A recent electronic device is able to store various kinds of data, for example, is able to share stored data with other electronic devices via wireless communication or wire communication. The electronic device may exchange connection information, such as a device identifier, with other electronic devices to share data with the other electronic device connected thereto wirelessly, and may then identify the electronic device to connect.

The electronic device may be connected with other electronic devices by using BLUETOOTH (BT), WiFi, Near Field Communication (NFC), and the like, and connection with other electronic devices may be controlled by the electronic device.

The above information is presented as background information only to assist with an understanding of the present disclosure. No determination has been made, and no assertion is made, as to whether any of the above might be applicable as prior art with regard to the present disclosure.

EP 1712047 discloses a method of creating an ad-hoc connection between two electronic devices. A first device detects a hugging state between the first device and a second device, in which the first device and the second device are in close vicinity and a piece of information is received at the first device directly from the second device. In case a hugging state is detected, a handle is obtained proceeding from the received piece of information. The handle comprises an address of some device other than the first device. A communication channel is established between the first device and the other device using the address included in the handle.

EP 2610708 discloses an information processing apparatus that receives, from another information processing apparatus, first displacement information; senses second displacement information corresponding to movement of the information processing apparatus; and establishes a connection with the another information processing apparatus based on a predetermined relationship between the first displacement information and the second displacement information.

### Disclosure of Invention

### Solution to Problem

A related-art method for connecting an electronic device with other electronic devices by using a communication method (e.g., BLUETOOTH (BT), WiFi, Near Field Communication (NFC)) should directly use the two electronic devices (e.g., the electronic device and the other electronic device) to connect with each other. For example, in the case of a method for connecting electronic devices wirelessly by using the NFC method, the two electronic devices are connected with each other by each being tagged with the other. In this case, users must often remove their electronic devices from pockets or bags to tag them with each other, which may cause inconvenience to the users.

Aspects of the present disclosure are to address at least the above-mentioned problems and/or disadvantages and to provide at least the advantages described below. Accordingly, an aspect of the present disclosure is to provide a method and apparatus for connecting communication of electronic devices, which can provide improved convenience by connecting communication between an electronic device and other electronic devices by using an external electronic device interworking with the electronic device (e.g., an auxiliary electronic device of the electronic device).

In accordance with an aspect of the present disclosure, a method of an electronic device is provided. The method includes identifying situation information related to the electronic device, the situation information comprising at least one of a sound, a vibration, an image, or a motion of the electronic device, wherein the sound, the vibration, and the image are sensed in the electronic device; communicating, based on the situation information, with a first external device using a first communication method; acquiring, based on the communication with the first external device, connection information associated with a second external device, the second external device communicating with the first external device using a second communication method; and providing the connection information to a third external device such that the second external device and the third external device subsequently directly communicate with each other based on the connection information using a third communication method, the third external device communicating with the electronic device using the second communication method.

In accordance with a related aspect to the present disclosure, a method of an electronic device is provided. The method includes identifying situation information related to the electronic device, based on the situation information, communicating with a first external device, based on communication with the first external device, acquiring connection information on a second external device communicating with the first external device, and providing the connection information to a third external device communicating with the electronic device such that the second external device and the third external device subsequently communicate with each other using the connection information.

In accordance with a related aspect to the present disclosure, a method of an electronic device is provided. The method includes communicating with a first external device, receiving connection information related to a second external device communicating with the first external device through the first external device, and directly communicating, by the electronic device, with the second external device by using the connection information. The connection information may be information received at the first external device based on situation information related to the first external device, which is acquired in the first external device.

In accordance with a related aspect to the present disclosure, an electronic device is provided. The electronic device includes a sensing module configured to sense situation information related to the electronic device, a communication module configured to enable the electronic device and a first external device for the electronic device to communicate with each other, and at least one processor. The processor may be configured to acquire connection information corresponding to at least one of the first external device and a second external device communicating with the first external device by using the communication module, and to provide the connection information to a third external device communicating with the electronic device such that the device to which the connection information corresponds and the third electronic device subsequently directly communicate with each other using the connection information.

In accordance with another aspect of the present disclosure, an electronic device is provided. The electronic device includes a communication module; and at least one processor, wherein the processor is configured to: acquire, using the communication module, connection information associated with a third external device from the first external device, wherein the third external device is specified by a second external device communicating with the first external device, and make, using the communication module, the electronic device directly communicate with the third external device based on the connection information, wherein the first external device communicates with the second external device using a first communication method, the electronic device communicates with the first external device using a second communication method, and the electronic device communicates with the third external device using a third communication method, and wherein the connection information is received at the first external device from the second external device based on situation information, related to the first external device, which is acquired in the first external device.

In accordance with a related aspect to the present disclosure, a computer-readable recording medium is provided. The computer-readable recording medium is encoded with a program for causing an electronic device to perform operations of sensing situation information related to the electronic device, based on the situation information, communicating with a first external device, based on communication with the first external device, acquiring connection information corresponding to at least one of the first external device and a second external device communicating with the first external device, and providing the connection information to a third external device communicating with the electronic device such that one of the first external device and the second external device to which the connection information corresponds and the third external device subsequently directly communicate with each other using the connection information.

Other aspects, advantages, and salient features of the disclosure will become apparent to those skilled in the art from the following detailed description, which, taken in conjunction with the annexed drawings, discloses various embodiments of the present disclosure.

### Brief Description of Drawings

The above and other aspects, features, and advantages of certain embodiments of the present disclosure will be more apparent from the following description taken in conjunction with the accompanying drawings, in which:
FIG. 1 illustrates a view showing a network environment including an electronic device according to various embodiments of the present disclosure;
FIG. 2 illustrates a view showing a data sharing operation between electronic devices according to various embodiments of the present disclosure;
FIG. 3 illustrates a view showing a data sharing operation for wireless communication between electronic devices according to various embodiments of the present disclosure;
FIG. 4 illustrates a flowchart showing an operation of an auxiliary electronic device according to various embodiments of the present disclosure;
FIG. 5 illustrates a flowchart showing an operation of an electronic device according to various embodiments of the present disclosure;
FIG. 6 illustrates a view showing a situation in which a gesture for sharing data is made according to various embodiments of the present disclosure;
FIG. 7 illustrates a view showing performance of a data sharing operation according to various embodiments of the present disclosure;
FIG. 8 illustrates a view showing a data sharing operation according to various embodiments of the present disclosure;
FIG. 9 illustrates a view showing a data sharing operation according to various embodiments of the present disclosure;
FIG. 10 illustrates a view showing a data sharing operation according to various embodiments of the present disclosure;
FIG. 11 illustrates a view showing an operation of defining sharing data according to various embodiments of the present disclosure;
FIG. 12 illustrates a flowchart showing a data sharing operation of an electronic device according to various embodiments of the present disclosure;
FIG. 13 illustrates a block diagram of an electronic device according to various embodiments of the present disclosure; and
FIG. 14 illustrates a view showing a communication protocol between a plurality of electronic devices according to various embodiments of the present disclosure.

Throughout the drawings, it should be noted that like reference numbers are used to depict the same or similar elements, features, and structures.

### Best Mode for Carrying out the Invention

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure, which is given by the claims. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The terms "include" or "may include" used in the various embodiments of the present disclosure indicate the presence of disclosed corresponding functions, operations, elements, and the like, and do not limit additional one or more functions, operations, elements, and the like. In addition, it should be understood that the terms "include" or "has" used in the various embodiments of the present disclosure are to indicate the presence of features, numbers, steps, operations, elements, parts, or a combination thereof described in the specification, and do not preclude the presence or addition of one or more other features, numbers, steps, operations, elements, parts, or a combination thereof.

The term "or" used in the various embodiments of the present disclosure includes any and all combinations of words enumerated with it. For example, "A or B" means "including A," "including B," or "including both A and B."

Although the terms such as "first" and "second" used in the various embodiments of the present disclosure may modify various elements of the various embodiments, these terms do not limit the corresponding elements. For example, these terms do not limit an order and/or importance of the corresponding elements. These terms may be used for the purpose of distinguishing one element from another element. For example, a first user device and a second user device all indicate user devices and may indicate different user devices. For example, a first element may be named a second element without departing from the scope of right of the various embodiments of the present disclosure, and similarly, a second element may be named a first element.

It will be understood that when an element is "connected" or "coupled" to another element, the element may be directly connected or coupled to another element, and there may be an intervening element between the element and another element. To the contrary, it will be understood that when an element is "directly connected" or "directly coupled" to another element, there is no intervening element between the element and another element.

The terms used in the various embodiments of the present disclosure are for the purpose of describing particular embodiments only and are not intended to limit the present disclosure. As used herein, the singular forms are intended to include the plural forms as well, unless the context clearly indicates otherwise.

All of the terms used herein including technical or scientific terms have the same meanings as those generally understood by an ordinary skilled person in the related art unless they are defined otherwise. The terms defined in a generally used dictionary should be interpreted as having the same meanings as the contextual meanings of the relevant technology and should not be interpreted as having ideal or exaggerated meanings unless they are clearly defined in the various embodiments.

An electronic device according to various embodiments of the present disclosure may be a device that is equipped with a communication function. For example, the electronic device may include at least one of a smartphone, a tablet Personal Computer (PC), a mobile phone, a video phone, an electronic book reader, a desktop PC, a laptop PC, a netbook computer, a Personal Digital Assistant (PDA), a Portable Multimedia Player (PMP), a digital audio player, a mobile medical machine, a camera, or a wearable device (e.g., a Head-Mounted-Device (HMD) such as electronic glasses, electronic clothing, an electronic bracelet, an electronic necklace, an electronic appccessory, electronic tattoos, or a smartwatch).

According to an embodiment, the electronic device may be a smart home appliance that is equipped with a communication function. For example, the smart home appliance may include at least one of a television, a Digital Versatile Disk (DVD) player, a stereo, a refrigerator, an air conditioner, a cleaner, an oven, a microwave oven, a washing machine, an air cleaner, a set-top box, a TV box (for example, Samsung HomeSync™, Apple TV™, or Google TV™), a game console, an electronic dictionary, an electronic key, a camcorder, or an electronic album.

According to an embodiment, the electronic device may include at least one of various medical machines (for example, Magnetic Resonance Angiography (MRA), Magnetic Resonance Imaging (MRI), Computerized Tomography (CT), a tomograph, an ultrasound machine, and the like), a navigation device, a Global Positioning System (GPS) receiver, an Event Data Recorder (EDR), a Flight Data Recorder (FDR), an automotive infotainment device, an electronic equipment for ship (for example, a navigation equipment for ship, a gyro compass, and the like), avionics, a security device, or an industrial or home robot.

According to an embodiment, the electronic device may include at least one of a part of furniture or a building/a structure equipped with a communication function, an electronic board, an electronic signature receiving device, a projector, and various measurement devices (for example, water, power, gas, radio waves, and the like). The electronic device according to various embodiments of the present disclosure may be a combination of one or more of the above-mentioned devices. In addition, it is obvious to an ordinary skilled person in the related art that the electronic device according to various embodiments of the present disclosure is not limited to the above-mentioned devices.

Hereinafter, an electronic device according to various embodiments will be explained with reference to the accompanying drawings. The term "user" used in various embodiments may refer to a person who uses the electronic device or a device that uses the electronic device (for example, an artificial intelligence electronic device).

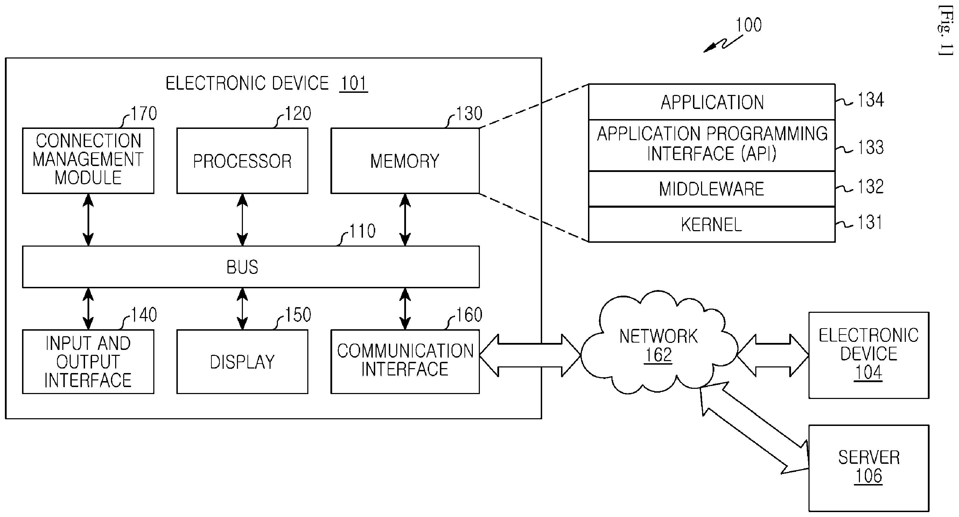

FIG. 1 illustrates a view showing a network environment 100 including an electronic device 101 according to various embodiments.

Referring to FIG. 1, the electronic device 101 may include a bus 110, a processor 120, a memory 130, an input and output interface 140, a display 150, a communication interface 160, and a connection management module 170.

The bus 110 may be a circuit which connects the above-described elements with one another and transmits communication (e.g., a control message) between the above-described elements.

The processor 120 may receive instructions from the other elements (e.g., the memory 130, the input and output interface 140, the display 150, the communication interface 160, the connection management module 170, and the like) via the bus 110, decipher the instructions, and perform calculation or data processing according to the deciphered instructions.

The memory 130 may store instructions or data which is received from or generated by the processor 120 or the other elements (e.g., the input and output interface 140, the display 150, the communication interface 160, the connection management module 170, and the like). For example, the memory 130 may include programming modules such as a kernel 131, middleware 132, an Application Programming Interface (API) 133, an application 134, and the like. Each of the above-described programming modules may be configured by software, firmware, hardware, or a combination of two or more of them.

The kernel 131 may control or manage system resources (e.g., the bus 110, the processor 120, the memory 130, and the like) which are used for performing operations or functions implemented in the other programming modules, for example, the middleware 132, the API 133, or the application 134. In addition, the kernel 131 may provide an interface for allowing the middleware 132, the API 133, or the application 134 to access an individual element of the electronic device 101 and control or manage the element.

The middleware 132 may serve as an intermediary to allow the API 133 or the application 134 to communicate with the kernel 131 and exchange data with the kernel 131. In addition, the middleware 132 may perform controlling (e.g., scheduling or load balancing) with respect to work requests received from the application 134, for example, by giving priority to use the system resources of the electronic device 101 (e.g., the bus 110, the processor 120, the memory 130, and the like) to at least one of the applications 134.

The API 133 is an interface for allowing the application 134 to control a function provided by the kernel 131 or the middleware 134, and, for example, may include at least one interface or function (e.g., instructions) for controlling a file, controlling a window, processing an image, or controlling a text.

According to various embodiments, the application 134 may include a Short Message Service (SMS)/Multimedia Messaging Service (MMS) application, an email application, a calendar application, a notification application, a health care application (e.g., an application for measuring exercise or blood sugar), an environment information application (e.g., an application for providing information on atmospheric pressure, humidity, or temperature), and the like. Additionally or alternatively, the application 134 may be an application related to an information exchange between the electronic device 101 and an external electronic device (e.g., an electronic device 140). For example, the application related to the information exchange may include a notification relay application for relaying specific information to the external electronic device or a device management application for managing the external electronic device.

For example, the notification relay application may include a function of relaying notification information generated by other applications of the electronic device 101 (e.g., the SMS/MMS application, the email application, the health care application, the environment information application, and the like) to an external electronic device (e.g., the electronic device 104). Additionally or alternatively, the notification relay application may receive notification information from the external electronic device (e.g., the electronic device 104) and may relay the same to the user. For example, the device management application may manage (e.g., install, delete, or update) a function regarding at least part of the external electronic device (e.g., the electronic device 104) communicating with the electronic device 101 (e.g., turning on/off the external electronic device (or some parts thereof) or adjusting a brightness of a display), an application operating in the external electronic device or a service provided by the external electronic device (e.g., a calling service or a message service).

According to various embodiments, the application 134 may include an application specified according to an attribute (e.g., a kind or type of an electronic device) of the external electronic device (e.g., the electronic device 104). For example, when the external electronic device is a digital audio player, the application 134 may include an application related to music replay. Similarly, when the external electronic device is a mobile medical device, the application 134 may include an application related to health care. According to an embodiment, the application 134 may include at least one of an application specified by the electronic device 101 or an application received from the external electronic device (e.g., a server 106 or the electronic device 104).

The input and output interface 140 may transmit instructions or data input by the user through an input and output device (e.g., a sensor, a keyboard, or a touch screen) to the processor 120, the memory 130, the communication interface 160, or the connection management module 170 through the bus 110, for example. For example, the input and output interface 140 may provide data on a user's touch input through a touch screen to the processor 120. In addition, the input and output interface 140 may output instructions or data received from the processor 120, the memory 130, the communication interface 160, or the connection management module 170 through the bus 110 through the input and output device (e.g., a speaker or a display). For example, the input and output interface 140 may output audio data processed by the processor 120 to the user through a speaker.

The display 150 may display a variety of information (e.g., multimedia data, text data, and the like) for the user.

The communication interface 160 may connect communication between the electronic device 101 and the external device (e.g., the electronic device 104 or the server 106). For example, the communication interface 160 is connected to a network 162 via wireless communication or wire communication to communicate with the external device. The wireless communication may include at least one of WiFi, BLUETOOTH (BT), Near Field Communication (NFC), GPS, or cellular communication (e.g., Long Term Evolution (LTE), LTE-Advanced (LTE-A), Code Division Multiple Access (CDMA), Wideband-CDMA (WCDMA), Universal Mobile Telecommunications System (UMTS), Wireless Broadband (WiBro), Global System for Mobile communication (GSM), and the like). The wire communication may include at least one of a Universal Serial Bus (USB), a High Definition Multimedia Interface (HDMI), a Recommended Standard 232 (RS-232), or a Plain Old Telephone Service (POTS).

According to an embodiment, the network 162 may be a telecommunications network. The telecommunications network may include at least one of a computer network, the Internet, the Internet of things, or a telephone network. According to an embodiment, a protocol for communicating between the electronic device 101 and the external device (e.g., a transport layer protocol, data link layer protocol or a physical layer protocol) may be supported in at least one of the application 134, the application programming interface 133, the middleware 132, the kernel 131, or the communication interface 160.

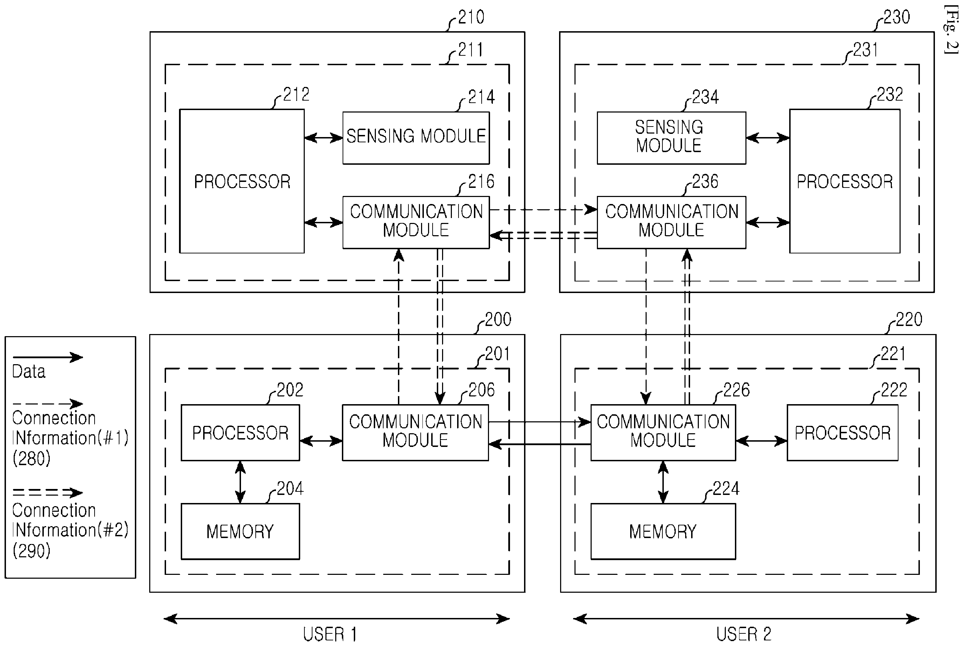

According to an embodiment, the connection management module 170 may directly communicate with another external electronic device (hereinafter, referred to as a target device for convenience of explanation) by using an external electronic device (hereinafter, referred to as an auxiliary device) through the communication interface 160, for example. For example, when the connection management module 170 communicates with the auxiliary device, the connection management module 170 may acquire connection information related to the target device through the auxiliary device. The connection management module 170 may request the target device to communicate therewith by using the acquired connection information. According to an embodiment, the connection management module 170 may control an external electronic device (hereinafter, referred to as a first external device for convenience of explanation) communicating therewith to directly communicate with another external device (hereinafter, referred to as a second external device for convenience of explanation). Additional information on the connection management module 170 will be provided below with reference to FIGS. 2 to 17.

FIG. 2 illustrates a view showing a data sharing operation between electronic devices according to various embodiments of the present disclosure.

Referring to FIG. 2, the data sharing operation may be performed between a first electronic device 200 connected with a first auxiliary electronic device 210 and a second electronic device 220 connected with a second auxiliary electronic device 230. According to an embodiment, the first and second electronic devices 200 and 220 may be portable electronic devices (for example, smartphones), and the first and second auxiliary electronic devices 210 and 230 may be wearable electronic devices (for example, smart watches). According to an embodiment, the first and second electronic devices 200 and 220 may be wearable electronic devices and the first and second auxiliary electronic devices may be portable electronic devices. For example, the terms "electronic device" and "auxiliary electronic device" are used only for convenience of explanation and should not be limited to specific kinds of electronic devices. The data sharing operation may be transmitting data which is stored in the first electronic device 200 or the second electronic device 220 or data which is defined as a sharing target to the other electronic device. According to an embodiment, the data sharing operation may be an operation of sharing at least one of image data, document data, multimedia data, phonebook data, name card data, and schedule data with the other electronic device.

The first electronic device 200 may include a connection management module 201 (e.g., the connection management module 170). The connection management module 201 may include a processor 202, a memory 204, and a communication module 206, and the processor 202 may control the communication module 206 to connect the first auxiliary electronic device 210 and the second electronic device 220 through the communication module 206.

According to an embodiment, the communication module 206 may connect the first electronic device 200 and the first auxiliary electronic device 210 by using a first communication method (e.g., WiFi or BT), and may connect the first electronic device 200 and the second electronic device 220 by using a second communication method (e.g., NFC or BT Low Energy (BLE)). According to an embodiment, the first communication method and the second communication method may be the same method or different methods.

According to an embodiment, the processor 202 of the first electronic device 200 may acquire connection information 290 of the second electronic device 220 (e.g., second connection information) through the first auxiliary electronic device 210, and may share data with the second electronic device 220 based on the acquired connection information. The second connection information 290 may be information related to communication of the second electronic device 220 (e.g., a Media Access Control (MAC) address, a Service Set Identifier, a Basic Service Set Identifier, a Device Identifier, and the like), for example. According to an embodiment, the processor 202 may provide connection information 280 of the first electronic device 200 (e.g., first connection information) to the first auxiliary electronic device 210 through the communication module 206. The processor 202 may be connected with a communication module 226 of the second electronic device 220 based on the second connection information 290 on the second electronic device 220. According to an embodiment, the processor 202 may provide sharing data stored in the memory 204 of the first electronic device 200 to the second electronic device 220 or may download sharing data stored in the second electronic device 220. The sharing data may include image data, document data, multimedia data, phonebook data, name card data, schedule data, and the like which may be stored in the first electronic device 200 or the second electronic device 220, and sharing data may be specified by the first electronic device, the second electronic device, the first auxiliary electronic device, or the second auxiliary electronic device.

According to an embodiment, the first auxiliary electronic device 210 may be a device that may communicate with the first electronic device in a wired or wireless manner, and may include a connection management module 211 (e.g., the connection management module 170). The connection management module 211 may include a processor 212, a sensing module 214, and a communication module 216.

The first auxiliary electronic device 210 may support a first communication method for connecting with the first electronic device 200 and a second communication method for connecting with the second auxiliary electronic device 230. The first auxiliary electronic device 210 may try to connect with the second auxiliary electronic device 230 while being connected with the first electronic device 200.

The processor 212 of the first auxiliary electronic device 210 may try to connect with the second auxiliary electronic device 230 based on situation information related to the first auxiliary electronic device 210 (for example, a sound, vibration, or image sensed in the first auxiliary electronic device, or a motion of the first auxiliary electronic device). According to an embodiment, the processor 212 may control the communication module 216 to connect with the second auxiliary electronic device 230 when situation information collected through the sensing module 214 corresponds to information specified in the first auxiliary electronic device (e.g., a specified sound, vibration, or image, or motion information). According to an embodiment, the sensing module 214 may include an image sensor (or a camera), a microphone, and at least one sensor (e.g., an acceleration sensor, a gyro sensor) for sensing a motion or vibration. In addition, for example, the sensing module 214 may collect information corresponding to an image corresponding to a gesture of the second auxiliary electronic device 230, or a sound, motion, or vibration generated by a gesture of the first auxiliary electronic device 210 or the second auxiliary electronic device 230, as the situation information.

In one example, when it is determined that situation information for connecting with the second auxiliary electronic device 230 is sensed, the processor 212 of the first auxiliary electronic device 210 may connect with the second auxiliary electronic device 230. For example, the first auxiliary electronic device 210 may connect with the second auxiliary electronic device 230 in the second communication method supported by the second auxiliary electronic device 230. According to an embodiment, the processor 212 may change an inactivation state of the second communication method to an activation state based on sensed situation information related to the first auxiliary electronic device.

When the first auxiliary electronic device 210 and the second auxiliary electronic device 230 are connected with each other, the processor 212 may provide the connection information 280 of the first electronic device 200 (e.g., a Media Access Control (MAC) address, a Service Set Identifier, a Basic Service Set Identifier, a Device Identifier of the first electronic device, and the like) to the second auxiliary electronic device 230. In addition, the processor 212 may receive the connection information 290 of the second electronic device 220 (e.g., a MAC address, a Service Set Identifier, a Basic Service Set Identifier, a Device Identifier of the second electronic device, and the like) from the second auxiliary electronic device 230, and may provide the connection information 290 to the first electronic device 200.

The second auxiliary electronic device 230 may include a connection management module 231 (e.g., the connection management module 170) including a processor 232, a sensing module 234, and a communication module 236, and may perform an operation corresponding to the first auxiliary electronic device 210. According to an embodiment, when the second auxiliary electronic device 230 is connected with the first auxiliary electronic device 210, the processor 232 of the second auxiliary electronic device 230 may receive the connection information 280 of the first electronic device 200 from the first auxiliary electronic device 210 and may provide the connection information 280 to the second electronic device 200. In addition, the processor 232 of the second auxiliary electronic device 230 may provide the connection information 290 of the second electronic device 220 to the first auxiliary electronic device 210.

In one example, the second electronic device 220 may include a connection management module 221 (e.g., the connection management module 170) including a processor 222, a memory 224, and a communication module 226, and may perform an operation corresponding to the first electronic device 200.

According to an embodiment, the processor 222 of the second electronic device 220 may exchange connection information with the first electronic device 200 through the second auxiliary electronic device 230, and then may share data with the first electronic device 200. According to an embodiment, the processor 222 may provide the connection information 290 stored in the memory 224 to the second auxiliary electronic device 230 through the communication module 226, and may receive the connection information 280 of the first electronic device 200 from the second auxiliary electronic device 230.

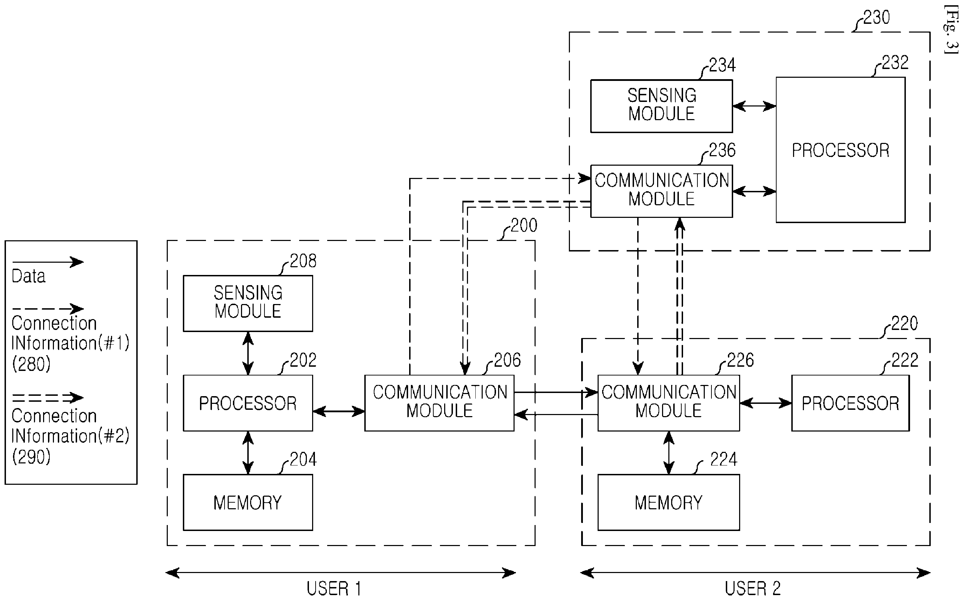

FIG. 3 illustrates a view showing a data sharing operation for wireless communication between electronic devices according to various embodiments of the present disclosure. Explanations of the same or similar elements as or to those of FIG. 2 are omitted.

According to an embodiment, a first electronic device 200 may include a connection management module (e.g., the connection management module 170) including a processor 202, a memory 204, a communication module 206, and a sensing module 208, and the processor 202 of the first electronic device 200 may exchange connection information for wireless communication (e.g., first connection information 280 (e.g., a MAC address, a Service Set Identifier, a Basic Service Set Identifier, a Device Identifier, and the like of the first electronic device) and second connection information 290 (e.g., a MAC address, a Service Set Identifier, a Basic Service Set Identifier, a Device Identifier, and the like of the second electronic device)) with a second electronic device 220 through a second auxiliary electronic device 230, and then may share data with the second electronic device 220. According to an embodiment, the processor 202 may try to connect with the second auxiliary electronic device 230 based on situation information related to the electronic device 200 (e.g., a sound, vibration, or an image sensed by the first electronic device, or a motion of the first electronic device). According to an embodiment, when situation information collected through the sensing module 208 corresponds to information specified in the first electronic device (e.g., a specified sound, vibration, image, or motion information), the processor 202 may control the communication module 206 to connect with the second auxiliary electronic device 230.

The second auxiliary electronic device 230 may include a connection management module (e.g., the connection management module 170) including a processor 232, a sensing module 234, and a communication module 236, and, when the second auxiliary electronic device 230 is connected with the first electronic device 200, the processor 232 of the second auxiliary electronic device 230 may receive the connection information 280 of the first electronic device 200 from the first electronic device 200 and may provide the connection information 280 to the second electronic device 220. In addition, the processor 232 of the second auxiliary electronic device 230 may provide the connection information 290 of the second electronic device 220 to the first electronic device 200.

The second electronic device 220 may include a connection management module (e.g., the connection management module 170) including a processor 222, a memory 224, and a communication module 226, and the processor 222 of the second electronic device 220 may exchange the connection information with the first electronic device 200 through the second auxiliary electronic device 230 and then may share data with the first electronic device 200. According to an embodiment, the processor 222 may provide the connection information 290 stored in the memory 224 to the second auxiliary electronic device 230 through the communication module 226 and may receive the connection information 280 of the first electronic device 200 from the second auxiliary electronic device 230.

According to various embodiments, an auxiliary electronic device communicating through an electronic device may include a sensing module (e.g., the sensing module 214) to sense situation information (e.g., a gesture, sound, motion, or vibration) related to the electronic device (e.g., the first auxiliary electronic device 210), a communication module (e.g., the communication module 216) to communicate with the electronic device and a first external device (e.g., the second auxiliary electronic device 230) for the electronic device, and at least one processor (e.g., the processor 212). The processor may acquire connection information (e.g., a MAC address) corresponding to at least one of the first external device or a second external device (e.g., the second electronic device 220) communicating with the first external device through the communication module, and may provide the connection information to a third external device (e.g., the first electronic device 200) communicating with the electronic device such that the device corresponding to the connection information (e.g., the second auxiliary electronic device 230 or the second electronic device 220) and the third electronic device directly communicate with each other.

According to various embodiments, the sensing module may sense whether the electronic device is located within a specified distance from the first external device.

According to various embodiments, the sensing module may sense at least one of a motion, sound, image, or vibration generated based on the user for the first external device or the electronic device, as the situation information.

According to various embodiments, the processor may discover the connection information corresponding to the first external device by activating a communication module functionally connected with the electronic device.

According to various embodiments, the processor may provide connection information corresponding to the third external device to the first external device.

According to various embodiments, an electronic device communicating through an electronic device may include a communication module (e.g., the communication module 226) to communicate with a first external device (e.g., the second auxiliary electronic device 230) for the electronic device (e.g., the second electronic device 220), and at least one processor (for example, the processor 222). The processor may acquire connection information of a third external device specified by a second external device which communicates with the first external device from the first external device, and the electronic device may directly communicate with the third external device by using the connection information. According to various embodiments, the connection information may be information which is received at the first external device from the second external device based on situation information related to the first external device, which is acquired by the first external device.

According to various embodiments, the process may make the electronic device communicate with the third external device by using a communication method different from a communication method with the first external device.

According to various embodiments, the processor may make the electronic device communicate with the third external device without passing through the first external device and the second external device.

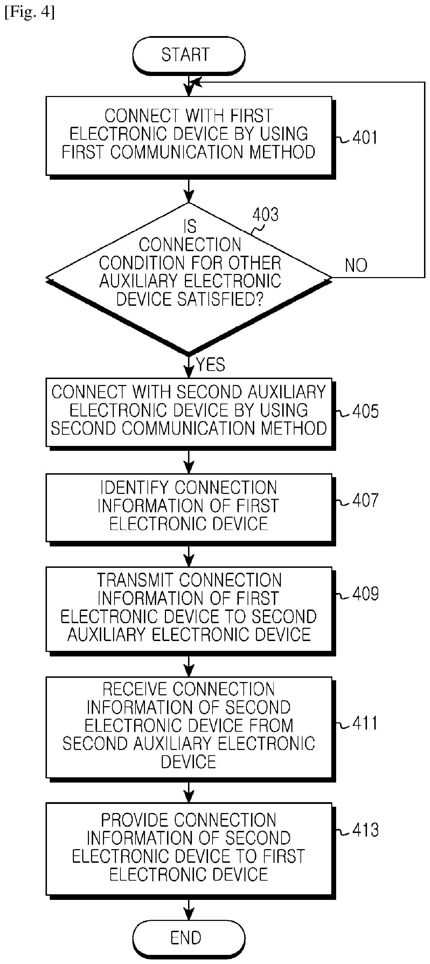

FIG. 4 illustrates a flowchart showing an operation of an auxiliary electronic device according to various embodiments of the present disclosure.

Referring to FIG. 4, the auxiliary electronic device (e.g., a first auxiliary electronic device 310) may be connected with a first electronic device by using a first communication method, and may be connected with other auxiliary electronic device (e.g., a second auxiliary electronic device 330) by using a second communication method. The other auxiliary electronic device may be an electronic device which is connected with a second electronic device (e.g., by pairing). According to an embodiment, the first communication method and the second communication method may be the same communication method or different communication methods.

At operation 401, the auxiliary electronic device may be connected with the first electronic device by using the first communication method.

At operation 403, the auxiliary electronic device may determine whether a connection condition for the other auxiliary electronic device connected with the second electronic device is satisfied or not. According to an embodiment, the operation of determining whether the connection condition is satisfied or not may be an operation of determining whether situation information related to the auxiliary electronic device is specified situation information (e.g., a gesture of moving vertically, a sound or vibration made when devices hit each other, or a specified image of a device) or not. According to an embodiment, the situation information related to the auxiliary electronic device may include a gesture which may be made when the auxiliary electronic device is located within a predetermined range from the other auxiliary electronic device. The situation information gesture may include a handshake, high five, fist bump, hug, and the like. According to an embodiment, the auxiliary electronic device may determine whether the gesture is sensed or not based on a sound made by the gesture. According to another embodiment, the auxiliary electronic device may determine whether the gesture is sensed or not based on a motion or vibration generated by the gesture. According to another embodiment, the auxiliary electronic device may acquire an image on the other auxiliary electronic device and may determine whether user information (e.g., gesture) is sensed or not. According to an embodiment, the auxiliary electronic device may acquire an image on yet another auxiliary electronic device existing nearby, analyze the image, and determine whether the yet another auxiliary electronic device is located within the predetermined range or not.

At operation 405, the auxiliary electronic device may be connected with the other auxiliary electronic device by using the second communication method. The auxiliary electronic device may transmit connection information of the first electronic device connected with the auxiliary electronic device to the other auxiliary electronic device. In addition, the auxiliary electronic device may acquire connection information of the second electronic device connected with the other auxiliary electronic device from the other auxiliary electronic device. At operation 407, the auxiliary electronic device may identify the connection information of the first electronic device. According to an embodiment, the connection information may be information for identifying a device such as a device identifier, a MAC address, and the like.

At operation 409, the auxiliary electronic device may transmit the connection information of the first electronic device to the second auxiliary electronic device according to the second communication method.

At operation 411, the auxiliary electronic device may receive the connection information of the second electronic device from the second auxiliary electronic device.

At operation 413, the auxiliary electronic device may provide the connection information of the second electronic device received from the second auxiliary electronic device to the first electronic device according to the first communication method.

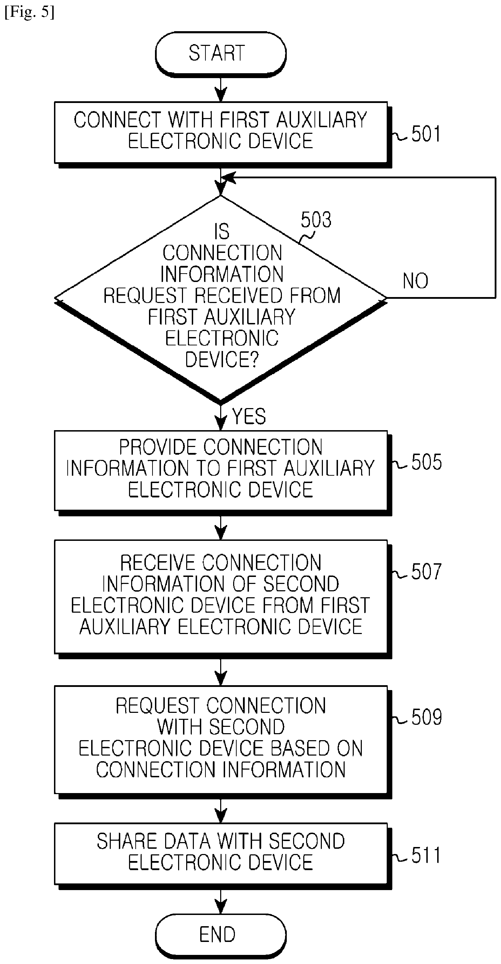

FIG. 5 illustrates a flowchart showing an operation of an electronic device according to various embodiments of the present disclosure.

At operation 501, the electronic device (e.g., a first electronic device 200) may be connected with a first auxiliary electronic device (e.g., a first auxiliary electronic device 210).

At operation 503, the electronic device may determine whether the electronic device receives a request for connection information from the first auxiliary electronic device. The connection information is information needed for connection with a second electronic device (e.g., a second electronic device 220) and may include information for identifying a device such as a device identifier, a MAC address, and the like. When the electronic device does not receive the request for the connection information from the first auxiliary electronic device, the electronic device may determine whether the request for the connection information is received or not while keeping a connection state with the first auxiliary electronic device.

When the request for the connection information is received, the electronic device may provide the connection information to the first auxiliary electronic device at operation 505. At operation 507, the electronic device may receive connection information of the second electronic device from the first auxiliary electronic device.

At operation 509, the electronic device may request connection with the second electronic device based on the received connection information.

According to an embodiment, the electronic device may discover surrounding electronic devices supporting a WiFi communication method by activating the WiFi communication method, and then may connect with a surrounding electronic device (second electronic device) corresponding to the connection information received from the first auxiliary electronic device.

At operation 511, the electronic device may share data with the second electronic device. According to an embodiment, the electronic device may provide data stored in a memory to the second electronic device.

According to an embodiment, the data sharing operation may be allowing access to sharing data stored in memories of the electronic device and the second electronic device. In this case, the second electronic device may download sharing data stored in the electronic device or the electronic device may download sharing data stored in the second electronic device.

Referring to FIG. 5, the electronic device is connected with the second electronic device by exchanging the connection information with the second electronic device.

According to various embodiments of the present disclosure, the electronic device may be connected with the second electronic device by transmitting only its own connection information. According to an embodiment, the electronic device may transmit connection information to the second electronic device and may accept the connection by receiving a connection request from the second electronic device.

According to various embodiments, the electronic device may be connected with the other electronic device by receiving only connection information of the other electronic device. According to an embodiment, the electronic device may request connection with the second electronic device based on connection information received from the second electronic device and may be connected with the second electronic device by receiving an acceptance from the second electronic device.

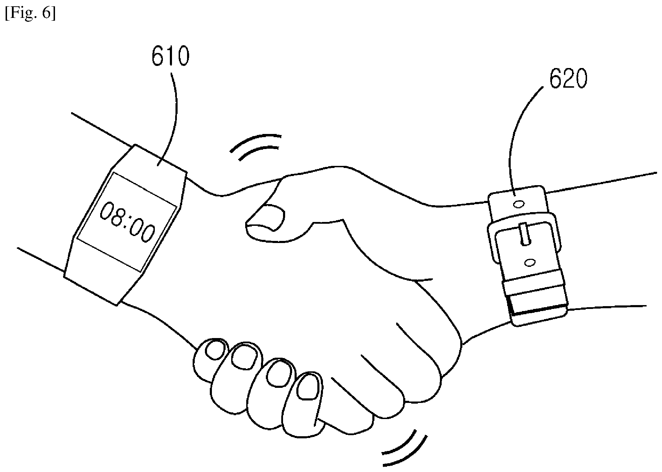

FIG. 6 illustrates a view showing a situation in which a gesture for sharing data is made according to various embodiments of the present disclosure.

Referring to FIG. 6, the gesture may be made by a user who wears or carries an auxiliary electronic device. In FIG. 6, the gesture may be sensed by auxiliary electronic devices 610 and 620 (e.g., the first auxiliary electronic device 210 and the second auxiliary electronic device 230 worn on the users' wrists.

Based on the gesture, the first auxiliary electronic device 610 and the second auxiliary electronic device 620 may be connected with each other, or a module for connecting the first auxiliary electronic device 610 and the second auxiliary electronic device 620 may be activated.

The gesture may generate a motion, vibration, and the like and may include a handshake as shown in FIG. 6.

The auxiliary device may include a sensor for sensing a motion, vibration, and the like generated by the gesture.

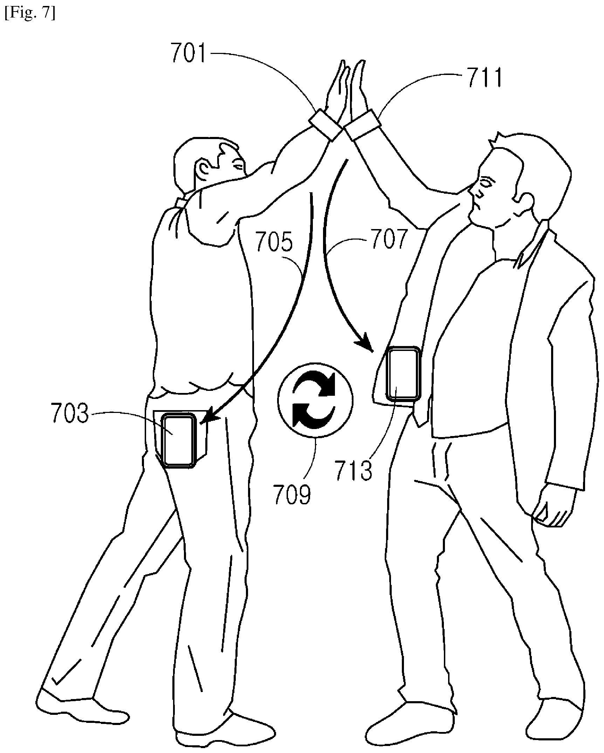

FIG. 7 illustrates a view showing performance of a data sharing operation according to various embodiments of the present disclosure.

Referring to FIG. 7, the data sharing operation may be performed by exchanging connection information of electronic devices based on a gesture of an auxiliary electronic device connected with the electronic device.

According to an embodiment, a user who carries a first electronic device 703 and a first auxiliary electronic device 701 and a user who carries a second electronic device 713 and a second auxiliary electronic device 711 may make gestures. The first auxiliary electronic device 701 may be connected with the first electronic device 703 and may be connected with the second auxiliary electronic device 711.

The gesture may be instructions to connect the first auxiliary electronic device 701 and the second auxiliary electronic device 711. When the first auxiliary electronic device 701 and/or the second auxiliary electronic device 711 sense a specified gesture (e.g., a handshake, high five, fist bump, hug, and the like), the first auxiliary electronic device 701 and/or the second auxiliary electronic device 711 may operate a communication module to be used to connect with the second auxiliary electronic device and/ or the first auxiliary electronic device.

Referring to FIG. 7, a high five operation which may generate a sound may be sensed as the gesture, and the first auxiliary electronic device 701 and the second auxiliary electronic device 711 may include a module for sensing the sound generated by the gesture, for example, a microphone.

The first auxiliary electronic device 701 and the second auxiliary electronic device 711 which are connected with each other by using the second communication method may acquire connection information of the electronic devices 703 and 713 connected with them, respectively, and may exchange the acquired connection information with each other. According to an embodiment, the first auxiliary electronic device 701 may acquire the connection information of the first electronic device 703 and may provide the connection information of the first electronic device 703 to the second auxiliary electronic device 711, and may receive the connection information of the second electronic device 713 from the second auxiliary electronic device 711 and may provide the connection information of the second electronic device 713 to the first electronic device 703. The second auxiliary electronic device 711 may acquire the connection information of the second electronic device 713 and may provide the connection information of the second electronic device 713 to the first auxiliary electronic device 701 (at operation 705), and may acquire the connection information of the first electronic device 703 from the first auxiliary electronic device 701 and may provide the connection information of the first electronic device 703 to the second electronic device 713 (at operation 707).

The electronic device which has acquired connection information of the other electronic device through the auxiliary electronic device may perform a data sharing operation 709 based on the connection information of the other electronic device. According to an embodiment, the first electronic device 703 may discover the second electronic device 713 and connect with it based on the connection information of the second electronic device 713, and may perform a data sharing operation of a pre-defined method.

In the above-described example, when the auxiliary electronic device senses a pre-defined gesture, the auxiliary electronic device communicates with the other auxiliary electronic device and then acquires connection information of the electronic device. However, according to various embodiments of the present disclosure, when the auxiliary electronic device senses a pre-defined gesture, the auxiliary electronic device may acquire connection information of the already connected electronic device and then may connect with the other auxiliary electronic device.

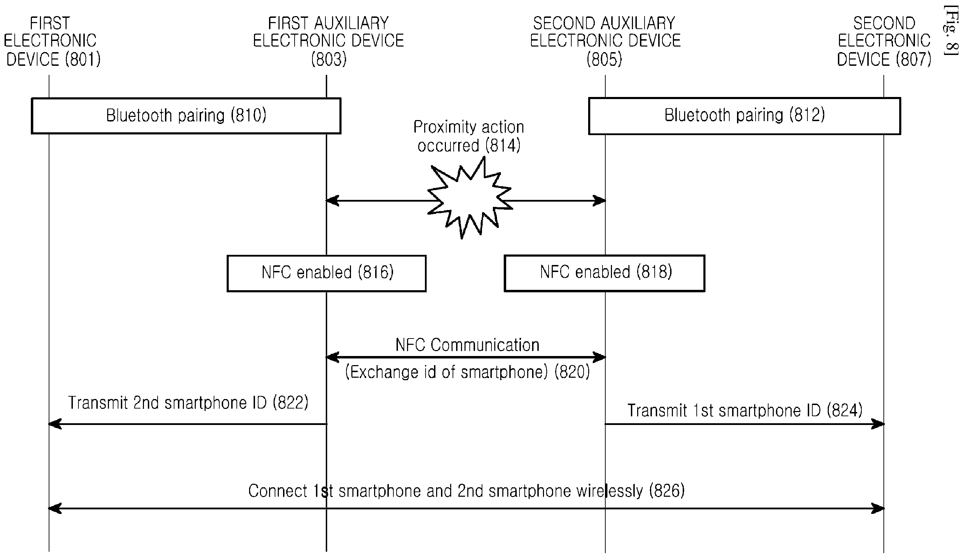

FIG. 8 illustrates a view showing a data sharing operation according to various embodiments of the present disclosure.

Referring to FIG. 8, the data sharing operation may be performed between a user who carries a first electronic device 801 and a first auxiliary electronic device 803 and a user who carries a second electronic device 807 and a second auxiliary electronic device 805.

The first auxiliary electronic device 803 may be connected with the first electronic device 801 by using a first communication method, and may be connected with the second auxiliary electronic 805 device by using a second communication method. According to an embodiment, the first auxiliary electronic device 803 may be connected with the first electronic device 801 based on a BT communication method at operation 810, and may be connected with the second auxiliary electronic device 805 based on NFC, although the present invention is not limited thereto.

The first auxiliary electronic device 803 may sense a gesture which is made in proximity of the second auxiliary electronic device 805. The gesture may be understood to include instructions to establish connection between the first auxiliary electronic device 803 and the second auxiliary electronic device 805, and may be a pre-defined gesture which may be made in proximity of the second auxiliary electronic device 805, such as a handshake, high five, fist bump, hug, and the like.

When the first auxiliary electronic device 803 senses the gesture at operation 814, the first auxiliary electronic device 803 may perform an operation for connecting with the second auxiliary electronic device 805. According to an embodiment, the first auxiliary electronic device 803 may activate a communication module for connecting with the second auxiliary electronic device 805, for example, enable an NFC module at operation 816, and then may communicate with the second auxiliary electronic device 805 which enables an NFC module at operation 818.

The first auxiliary electronic device 803 may acquire connection information on the first electronic device 801 already connected therewith, and may exchange the acquired connection information with the second auxiliary electronic device 805 at operation 820. According to an embodiment, the first auxiliary electronic device 803 may provide connection information of the second electronic device 807 received from the second auxiliary electronic device 805 to the already connected first electronic device 801 at operation 822, and the second auxiliary electronic device 805 may provide connection information of the first electronic device 801 received from the first auxiliary electronic device 803 to the second electronic device 807, at operation 824.

The first electronic device 801 may perform a data sharing operation based on the connection information of the second electronic device 807 received from the first auxiliary electronic device 803, at operation 826. Similarly, the second electronic device 807 may perform the data sharing operation based on the connection information of the first electronic device 801 received from the second auxiliary electronic device 805, at operation 826.

According to an embodiment, the first electronic device 801 may be connected with the second electronic device 807, which is another electronic device, and then may provide sharing of data stored in a memory to the second electronic device 807.

According to another embodiment, the first electronic device 801 may be connected with the second electronic device 807, which is another electronic device, and then may allow access to the sharing data stored in the memory of the first electronic device 801. In addition, the second electronic device 807 may allow the first electronic device 801 to access sharing data stored in a memory of the second electronic device 807.

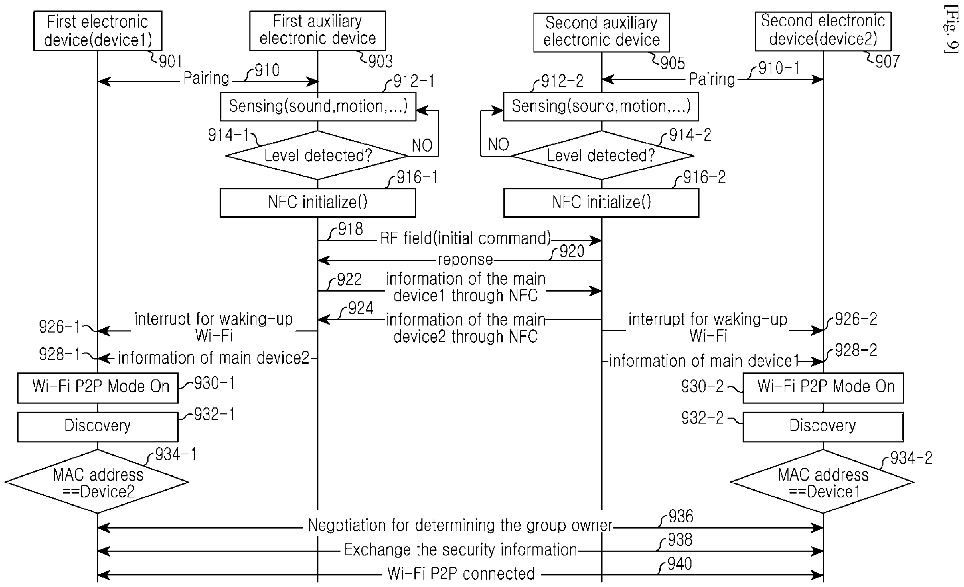

FIG. 9 illustrates a view showing a data sharing operation according to various embodiments of the present disclosure.

Referring to FIG. 9, the data sharing operation may be performed between a user who carries a first electronic device 901 and a first auxiliary electronic device 903 and a user who carries a second electronic device 907 and a second auxiliary electronic device 905.

The first auxiliary electronic device 903 may be connected with the first electronic device 901 by using a first communication method, and may be connected with the second auxiliary electronic device 905 by using a second communication method. According to an embodiment, the first auxiliary electronic device 903 may be connected with the first electronic device 901 based on a BT communication method, and the first auxiliary electronic device 903 may be connected with the second auxiliary electronic device 905 based on NFC.

The first auxiliary electronic device 903 may sense a gesture which is made in proximity of the second auxiliary electronic device 905. The gesture may be instructions to establish connection between the first auxiliary electronic device 903 and the second auxiliary electronic device 905, and may be a pre-defined gesture which may be made in proximity of the second auxiliary electronic device 905, such as a handshake, high five, fist bump, hug, and the like. According to an embodiment, the auxiliary electronic devices 903 and 905 may collect information corresponding to a sound, motion, vibration, and the like at operations 912-1 and 912-2, and may sense the gesture by comparing the collected information and a pre-defined threshold value.

When the collected information is greater than the pre-defined threshold value at operations 914-1 and 914-2, the auxiliary electronic devices 903 and 905 may activate a communication module for connecting with the other auxiliary electronic device, for example, an NFC module at operations 916-1 and 916-2.

The auxiliary electronic devices 903 and 905 may exchange connection information on the electronic devices 901 and 907 through NFC.

According to an embodiment, the first auxiliary electronic device 903 may form an RF field with initial instructions to initiate NFC communication at operation 918, and may receive a response to the instructions from the second auxiliary electronic device 905 through the RF field at operation 920.

The first auxiliary electronic device 903 identifies connection information of the first electronic device 901 (for example, a MAC address), and may provide the connection information to the second auxiliary electronic device 905 through NFC at operation 922. The second auxiliary electronic device 905 may identify connection information of the second electronic device 907 (for example, a MAC address) and may provide the connection information to the first auxiliary electronic device 903 through NFC at operation 924.

The auxiliary electronic devices 903 and 905 may request the already connected electronic devices 901 and 907 to perform a data sharing operation (e.g., a WiFi module operation request) at operations 926-1 and 926-2, and may provide the connection information received from the other auxiliary electronic device at operations 928-1 and 928-2.

The first electronic device 901 which has received the connection information may activate a communication mode for connecting with the second electronic device 907, for example, a WiFi mode at operation 930-1, and the second electronic device 907 which has received the connection information may activate a communication mode for connecting with the first electronic device 901, for example, the WiFi mode at operation 930-2, and each may discover the electronic device (the other electronic device) corresponding to the received connection information at operations 932-1 and 932-1.

The first electronic device 901 identifies the second electronic device 907 (the electronic device corresponding to the received MAC address) corresponding to the received connection information and vice versa at operations 9834-1 and 934-2, and may share data with the second electronic device 907.

According to an embodiment, the first electronic device 901 may determine a group owner to form a group with the second electronic device 907 connected therewith at operation 936, exchange security information at operation 938, and form a group for sharing data at operation 940.

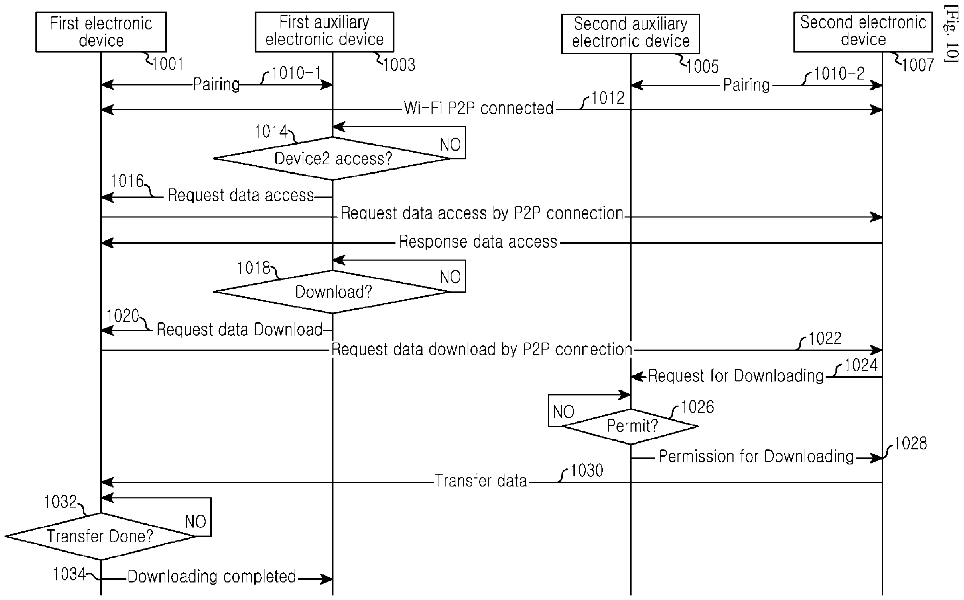

FIG. 10 illustrates a view showing a data sharing operation according to various embodiments of the present disclosure.

Referring to FIG. 10, a first electronic device 1001 may be connected (paired) with a first auxiliary electronic device 1003 at operation 1010-1, and a second electronic device 1007 may be connected (paired) with a second auxiliary electronic device 1005 at operation 1010-2. The data sharing operation may be performed while the first electronic device 1001 and the second electronic device 1007 are connected with each other by using connection information exchanged through the auxiliary electronic devices at operation 1012. The first electronic device 1001 may connect with the second electronic device 1007 at operation 1012 by using a WiFi Peer-to-Peer (P2P) connection, for example.

In addition, when the first auxiliary electronic device 1003 intends to access data stored in the second electronic device 1007 at operation 1014, the first auxiliary electronic device 1003 may transmit a request for data access to the first electronic device 1001 at operation 1016.

The first electronic device 1001 may transmit a request for data access to the second electronic device 1007, and may receive a response to the data access request from the second electronic device 1007. The first electronic device 1001 may access data of the second electronic device 1007 according to a user's request and may output a result of the accessing. The first electronic device 1001 may provide the result of the accessing to the first auxiliary electronic device 1003. The data access may include an operation of identifying a list of data, a kind of data, a name of data, and the like stored in the second electronic device.

Additionally, when the first auxiliary electronic device 1003 intends to download data stored in the second electronic device 1007 at operation 1018, the first auxiliary electronic device 1003 may transmit a request for data download to the first electronic device 1001 at operation 1020.

The first electronic device 1001 may transmit a request for data download to the second electronic device 1007 at operation 1022, and the second electronic device 1007 may determine whether the requested data is permitted to be downloaded or not. According to an embodiment, the second electronic device 1007 may output a message to determine whether data download will be allowed through the second auxiliary electronic device 1005 at operation 1024. When a user input to allow the data download is sensed at operation 1026, the second auxiliary electronic device 1005 may provide a message permitting the data download to the second electronic device 1007 at operation 1028.

Referring to FIG. 10, according to an embodiment of the present disclosure, the first auxiliary electronic device 1003 transmits the request for data access and the request for data download to the first electronic device, and the second auxiliary electronic device transmits the message permitting the data download to the second electronic device. However, these operations may be omitted during the data sharing operation.

The second electronic device 1007 may provide the permitted data to the first electronic device 1001 at operation 1030, and the first electronic device 1001 may complete data transfer at operation 1032 and complete the downloading operation at operation 1034.

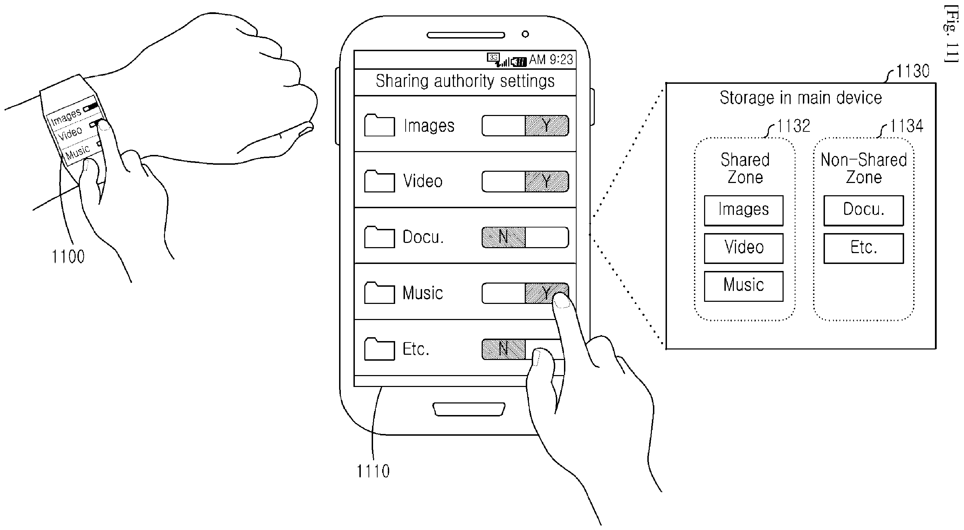

FIG. 11 illustrates a view showing an operation of defining sharing data according to various embodiments of the present disclosure.

Referring to FIG. 11, an electronic device 1110 may perform a data sharing operation by acquiring connection information on the other electronic device (e.g., the second electronic device 320) through an auxiliary electronic device 1100 (e.g., the first auxiliary electronic device 310). Data to be shared by the data sharing operation may be pre-defined. According to an embodiment, the data to be shared may be defined by a folder or file. In FIG. 11, the auxiliary electronic device 1100 or the electronic device 1110 may sense an input for defining sharing data.

When the auxiliary electronic device 1100 senses the input for defining the sharing data, the auxiliary electronic device 1100 may provide information on sharing data or non-sharing data to the electronic device 1110. The electronic device 1110 may manage the sharing data in a shared zone 1132 of a memory 1130 or may manage the non-sharing data in a non-shared zone 1134 of the memory 1130. The electronic device 1110 may directly sense the input for defining the sharing data.

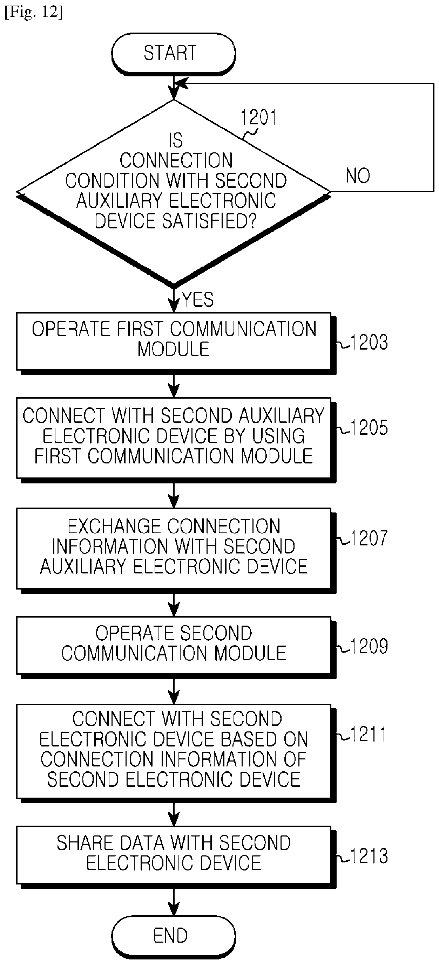

FIG. 12 illustrates a flowchart showing a data sharing operation of an electronic device according to various embodiments of the present disclosure.

Referring to FIG. 12, the electronic device may be connected with a second auxiliary electronic device connected with a second electronic device to perform data sharing operation. According to an embodiment, the electronic device and the second electronic device may be portable electronic devices (e.g., smartphones), and the second auxiliary electronic device may be a wearable device (e.g., a smartwatch).

At operation 1201, the electronic device may determine whether a connection condition with the second auxiliary electronic device is satisfied or not. According to an embodiment, it may be determined whether the connection condition is satisfied or not by sensing a gesture. According to an embodiment, the electronic device may include a sensor module and may determine whether a gesture corresponding to instructions to connect with the second auxiliary electronic device is sensed or not based on information collected by the sensor module. The sensor module may include an image sensor, a microphone, and a plurality of sensors to sense a motion or vibration.

At operation 1203, when the electronic device senses a gesture satisfying the connection condition, the electronic device may operate a first communication module.

At operation 1205, the electronic device may be connected with the second auxiliary electronic device by using the first communication module. According to an embodiment, when the gesture satisfying the connection condition is sensed, the electronic device may activate a module for communicating with the second auxiliary electronic device, for example, an NFC module, and may perform NFC.

At operation 1207, the electronic device may exchange connection information with the second auxiliary electronic device. According to an embodiment, the electronic device may provide connection information such as a device identifier, a MAC address, and the like to the second auxiliary electronic device, and in turn, the connection information is provided to the second electronic device such that the second electronic device can identify the electronic device. In addition, the electronic device may receive connection information on the second electronic device from the second auxiliary electronic device to identify the second electronic device.

At operation 1209, the electronic device may operate a second communication module. The second communication module may be a module for communicating with the second electronic device based on the received connection information.

At operation 1211, the electronic device may connect with the second electronic device based on the connection information of the second electronic device, and then, at operation 1213, may share data with the second electronic device.

According to various embodiments, a method for communicating through an electronic device (e.g., the second auxiliary electronic device 230) may include: identifying situation information (e.g., a gesture, sound, motion, or vibration) related to the electronic device; based on the situation information, communicating with a first external device (e.g., the first electronic device 200) for the electronic device; based on communication with the first external device, acquiring connection information (e.g., a MAC address) on the first external device; and providing the connection information to a second external device (e.g., the second electronic device 220) communicating with the electronic device such that the first external device and the second external device directly communicate with each other.

According to various embodiments, the identifying may include identifying at least one of a motion of the electronic device or a vibration, sound, or image acquired from an external source of the electronic device, as the situation information.

According to various embodiments, the identifying comprises detecting a predetermined gesture occurring within a predetermined distance of the electronic device.

According to various embodiments, the communicating with the first external device may include, when the situation information is information specified in the electronic device, activating a communication module functionally connected with the electronic device.

According to various embodiments, the communication module is determined according to the specified information.

According to various embodiments, the communication module is determined according to the connection information.

According to various embodiments, the providing may include providing, by the electronic device, connection information on the second external device to the first external device.

According to various embodiments, the connection information comprises at least one of a Media Access Control (MAC) address, a Service Set Identifier (SSID), a Basic SSID, a device identifier, a Universally Unique Identifier (UUID), a Subsystem Identifier, and an Internet Protocol (IP) address.

According to various embodiments, the communication with each of the first and second external devices is performed with at least one of WiFi, BLUETOOTH, BLUETOOTH-Low Energy (BLE), and Near Field Communication (NFC).

According to various embodiments, the direct communication comprises sharing of predetermined data.

According to various embodiments, the direct communication comprises requesting permission to share specific data and sharing the specific data for which the permission is granted.

According to various embodiments, a method for communicating through an electronic device (e.g., the first auxiliary electronic device 210) may include: identifying situation information (e.g., a gesture, sound, motion, or vibration) related to the electronic device; based on the situation information, communicating with a first external device (e.g., the second auxiliary electronic device 230) for the electronic device; based on communication with the first external device, acquiring connection information (e.g., a MAC address) on a second external device (e.g., the second electronic device 220) communicating with the first external device; and providing the connection information to a third external device (e.g., the first electronic device 200) communicating with the electronic device such that the second external device and the third external device communicate with each other.

According to various embodiments, the identifying may further include acquiring at least one of a motion, sound, image, or vibration based on a user for the first external device or the electronic device.

According to various embodiments, the identifying comprises detecting a predetermined gesture occurring within a predetermined distance of the electronic device.

According to various embodiments, the communicating with the first external device may include: activating a communication module functionally connected with the electronic device; and discovering the connection information corresponding to the first external device by using the communication module.

According to various embodiments, the communication module is determined according to the connection information.

According to various embodiments, the providing may include providing, by the electronic device, connection information corresponding to the third external device to the first external device.

According to various embodiments, the connection information corresponding to the third external device may be information which is acquired from the third external device in the electronic device based on the situation information.

According to various embodiments, the connection information comprises at least one of a Media Access Control (MAC) address, a Service Set Identifier (SSID), a Basic SSID, a device identifier, a Universally Unique Identifier (UUID), a Subsystem Identifier, and an Internet Protocol (IP) address.

According to various embodiments, the communication with each of the first, second, and third external devices is performed with at least one of WiFi, BLUETOOTH, BLUETOOTH-Low Energy (BLE), and Near Field Communication (NFC).

According to various embodiments, the direct communication comprises sharing of predetermined data.

According to various embodiments, the direct communication comprises requesting permission to share specific data and sharing the specific data for which the permission is granted.

According to various embodiments, a method for communicating through an electronic device (e.g., the first electronic device 200) may include: communicating with a first external device (e.g., the first auxiliary electronic device 210) for the electronic device; receiving connection information (e.g., a MAC address) related to a second external device (e.g., the second electronic device 220) communicating with the first external device through the first external device; and directly communicating, by the electronic device, with the second external device by using the connection information. According to various embodiments, the connection information may be information which is received at the first external device based on situation information (e.g., a gesture, sound, motion, or vibration) related to the first external device, which is acquired in the first external device.

According to various embodiments, the communicating with the second external device may include communicating, by the electronic device, with the second external device without passing through the first external device.

According to various embodiments, the communicating with the second external device may include: activating a communication module functionally connected with the electronic device; discovering the second external device by using the communication module; and transmitting a request for communication to the second external device.

According to various embodiments, the communication module is determined according to the situation information.

According to various embodiments, the communication module is determined according to the connection information.

According to various embodiments, the communicating with the second external device may include transmitting, by the electronic device, information specified by at least one of the first external device, the second external device, or the electronic device to the second external device.

According to various embodiments, the communicating with the second external device may include receiving, by the electronic device, information of at least one of the first external device, the second external device or the electronic device to the second external device.

According to various embodiments, the connection information comprises at least one of a Media Access Control (MAC) address, a Service Set Identifier (SSID), a Basic SSID, a device identifier, a Universally Unique Identifier (UUID), a Subsystem Identifier, and an Internet Protocol (IP) address.

According to various embodiments, the communication with each of the first and second external devices is performed with at least one of WiFi, BLUETOOTH, BLUETOOTH-Low Energy (BLE), and Near Field Communication (NFC).

According to various embodiments, the direct communication comprises sharing of predetermined data.

According to various embodiments, the direct communication comprises requesting permission to share specific data and sharing the specific data for which the permission is granted.

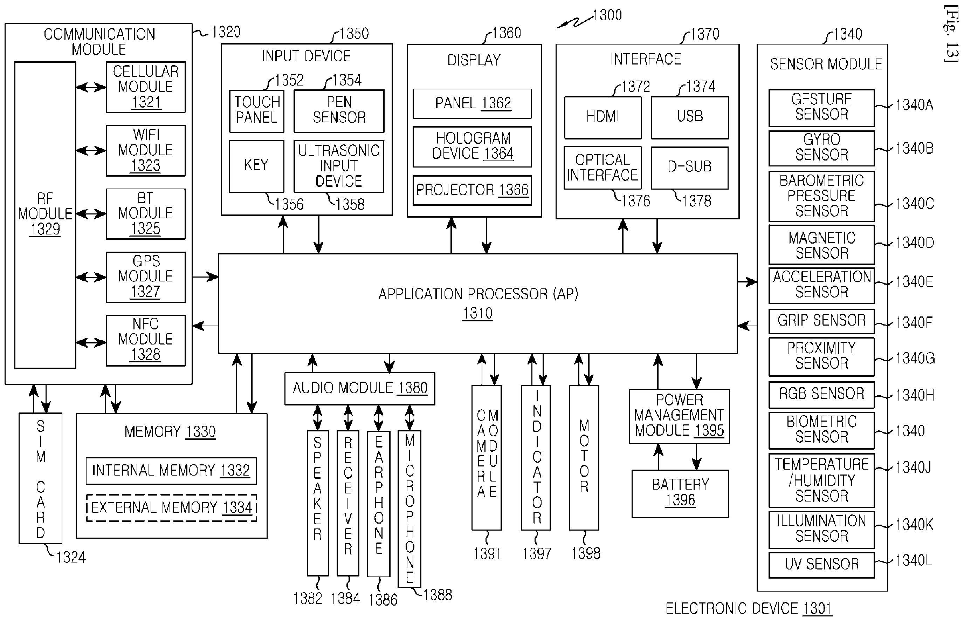

FIG. 13 illustrates a block diagram 1300 of an electronic device 1301 according to various embodiments. The electronic device 1301 may configure an entirety or part of the electronic device 101 shown in FIG. 1.

Referring to FIG. 13, the electronic device 1301 may include one or more Application Processors (APs) 1310, a communication module 1320, a Subscriber Identification Module (SIM) card 1324, a memory 1330, a sensor module 1340, an input device 1350, a display 1360, an interface 1370, an audio module 1380, a camera module 1391, a power management module 1395, a battery 1396, an indicator 1397, or a motor 1398.

The AP 1310 may control a plurality of hardware or software elements connected to the AP 1310 by driving an operating system or an application program, and may process and calculate a variety of data including multimedia data. For example, the AP 1310 may be implemented by using a System on Chip (SoC). According to an embodiment, the AP 1310 may further include a Graphics Processing Unit (GPU) (not shown).

The communication module 1320 (e.g., the communication interface 160) may transmit and receive data in communication between the electronic device 1301 (e.g., the electronic device 101) and other electronic devices (e.g., the electronic device 104 or the sever 106) connected through a network. According to an embodiment, the communication module 1320 may include a cellular module 1321, a WiFi module 1323, a BT module 1325, a GPS module 1327, an NFC module 1328, and a Radio Frequency (RF) module 1329.

The cellular module 1321 may provide a voice call, a video call, a text service, or an internet service through a telecommunications network (e.g., LTE, LTE-A, CDMA, WCDMA, UMTS, WiBro, GSM, and the like). In addition, the cellular module 1321 may identify and authenticate the electronic device in the telecommunications network by using a subscriber identification module (e.g., the SIM card 1324). According to an embodiment, the cellular module 1321 may perform at least some of functions provided by the AP 1310. For example, the cellular module 1321 may perform at least some of multimedia control functions.

According to an embodiment, the cellular module 1321 may include a Communication Processor (CP) (not shown). In addition, the cellular module 1321 may be implemented by using a SoC, for example. Referring to FIG. 13, the cellular module 1321 (e.g., the communication processor), the memory 1330, or the power management module 1395 are elements separate from the AP 1310. However, according to an embodiment, the AP 1310 may be configured to include at least some of the above-described elements (e.g., the cellular module 1321).

According to an embodiment, the AP 1310 or the cellular module 1321 (e.g., the communication processor) may load instructions or data received from a non-volatile memory connected therewith or at least one of the other elements into a volatile memory, and may process the instructions or data. In addition, the AP 1310 or the cellular module 1321 may store data which is received from at least one of the other elements or generated by at least one of the other elements in the non-volatile memory.

The WiFi module 1323, the BT module 1325, the GPS module 1327, or the NFC module 1328 each may include a processor for processing data received and transmitted through a corresponding module. Referring to FIG. 13, the cellular module 1321, the WiFi module 1323, the BT module 1325, the GPS module 1327, or the NFC module 1328 is illustrated in a separate block. However, according to an embodiment, at least some (e.g., two or more) of the cellular module 1321, the WiFi module 1323, the BT module 1325, the GPS module 1327, or the NFC module 1328 may be included in a single integrated chip (IC) or a single IC package. For example, at least some of the processors corresponding to the cellular module 1321, the WiFi module 1323, the BT module 1325, the GPS module 1327, and the NFC module 1328 (e.g., the communication processor corresponding to the cellular module 1321 and the WiFi processor corresponding to the WiFi module 1323) may be implemented by using a single SoC.

The RF module 1329 may transmit and receive data, for example, may transmit and receive an RF signal. Although not shown, the RF module 1329 may include a transceiver, a Power Amp Module (PAM), a frequency filter, or a Low Noise Amplifier (LNA), for example. In addition, the RF module 1329 may further include a part for exchanging electromagnetic waves in a free space in wireless communication, for example, a conductor or conducting wire. Referring to FIG. 13, the cellular module 1321, the WiFi module 1323, the BT module 1325, the GPS module 1327, and the NFC module 1328 share the single RF module 1329 with one another. However, according to an embodiment, at least one of the cellular module 1321, the WiFi module 1323, the BT module 1325, the GPS module 1327, or the NFC module 1328 may transmit and receive an RF signal through a single separate RF module.

The SIM card 1324 may be a card including a Subscriber Identification Module, and may be inserted into a slot formed on a specific location of the electronic device. The SIM card 1324 may include unique identification information (for example, an Integrated Circuit Card Identifier (ICCID)) or subscriber information (for example, an International Mobile Subscriber Identity (IMSI)).

The memory 1330 (e.g., the memory 130) may include an internal memory 1332 or an external memory 1334. For example, the internal memory 1332 may include at least one of (not shown) a volatile memory (for example, a Dynamic Random Access Memory (DRAM), a Static Random Access Memory (SRAM), a Synchronous DRAM (SDRAM), and the like) and a non-volatile memory (for example, an One-Time Programmable Read Only Memory (OTPROM), a Programmable Read Only Memory (PROM), an Erasable Programmable Read Only Memory (EPROM), an Electrically Erasable Programmable Read Only Memory (EEPROM), a mask ROM, a flash ROM, a NAND flash memory, a NOR flash memory, and the like).

According to an embodiment, the internal memory 1332 may be a Solid State Drive (SSD). The external memory 1334 may further include a flash drive, for example, Compact Flash (CF), Secure Digital (SD), Micro-SD, Mini-SD, extreme-Digital (xD), memory stick, and the like. The external memory 1334 may be functionally connected with the electronic device 1301 through various interfaces. According to an embodiment, the electronic device 1301 may further include a storage device (or a storage medium) such as a hard drive.

The sensor module 1340 may measure a physical quantity or detect an operation state of the electronic device 1301, and may convert measured or sensed information into electric signals. The sensor module 1340 may include at least one of a gesture sensor 1340A, a gyro sensor 1340B, a barometric pressure sensor 1340C, a magnetic sensor 1340D, an acceleration sensor 1340E, a grip sensor 1340F, a proximity sensor 1340G, a color sensor 1340H (e.g., a Red, Green, Blue (RGB) sensor), a biosensor 13401, a temperature/humidity sensor 1340J, an illumination sensor 1340K, and a Ultraviolet (UV) sensor 1340L. Additionally or alternatively, the sensor module 1340 may include (not shown) an E-nose sensor, an electromyography (EMG) sensor, an electroencephalogram (EEG) sensor, an electrocardiogram (ECG) sensor, an infrared ray (IR) sensor, an iris sensor, a fingerprint sensor, and the like. The sensor module 1340 may further include a control circuit (not shown) to control at least one sensor included therein.

The input device 1350 may include a touch panel 1352, a (digital) pen sensor 1354, a key 1356, or an ultrasonic input device 1358. The touch panel 1352 may recognize a touch input in at least one method of capacitive, resistive, infrared, and ultrasonic methods. In addition, the touch panel 1352 may further include a control circuit (not shown). In the embodiment of a capacitive method, the touch panel 1352 may recognize not only physical contact but also approach. The touch panel 1352 may further include a tactile layer (not shown). In this embodiment, the touch panel 1352 may provide a tactile response to the user.

The (digital) pen sensor 1354 may be implemented in the same or similar method as or to the method of receiving a user's touch input or by using a separate recognition sheet. The key 1356 may include (not shown) a physical button, an optical key, or a keypad. The ultrasonic input device 1358 allows the electronic device 1301 to detect sound waves through a microphone (for example, the microphone 1388) through an input device generating ultrasonic signals, and is capable of wireless recognition. According to an embodiment, the electronic device 1301 may receive a user input from an external device connected thereto (for example, a computer, or a server) by using the communication module 1320.

The display 1360 (e.g., the display 150) may include a panel 1362, a hologram device 1364, or a projector 1366. For example, the panel 1362 may be a Liquid Crystal Display (LCD) or an Active Matrix Organic Light Emitting Diode (AM-OLED). For example, the panel 1362 may be implemented flexibly, transparently, or to be wearable. The panel 1362 may be configured as a single module along with the touch panel 1352. The hologram device 1364 may show a stereoscopic image in the air using interference of light. The projector 1366 may display an image by projecting light onto a screen. The screen may be located inside or outside the electronic device 1301. According to an embodiment, the display 1360 may further include a control circuit to control the panel 1362, the hologram device 1364, or the projector 1366.

The interface 1370 may include a High Definition Multimedia Interface (HDMI) 1372, a Universal Serial Bus (USB) 1374, an optical interface 1376, or a D-subminiature (sub) 1378. The interface 1370 may be included in the communication interface 160 shown in FIG. 1. Additionally or alternatively, the interface 1370 may include (not shown) a Mobile High Definition Like (MHL) interface, a Secure Digital (SD)/Multimedia Card (MMC) interface, or an Infrared Data Association (IrDA) standard interface.

The audio module 1380 may convert a sound and an electric signal bidirectionally. For example, at least some elements of the audio module 1380 may be included in the input and output interface 140 shown in FIG. 1. The audio module 1380 may process sound information which is input or output through a speaker 1382, a receiver 1384, an earphone 1386, or a microphone 1388.

The camera module 1391 is a device for photographing a still image and a moving image, and may include (not shown) one or more image sensors (for example, a front surface sensor or a rear surface sensor), a lens, an Image Signal Processor (ISP), or a flash (for example, a Light Emitting Diode (LED) or a xenon lamp).

The power management module 1395 may manage power of the electronic device 1301. Although not shown, the power management module 1395 may include a Power Management IC (PMIC), a charging IC, or a battery or fuel gauge.

For example, the PMIC may be mounted in an integrated circuit or a SoC semiconductor. The charging method may be divided into a wired charging method and a wireless charging method. The charging IC may charge a battery and may prevent inflow of overvoltage or over current from a charger. According to an embodiment, the charging IC may include a charging IC for at least one of the wired charging method and the wireless charging method. The wireless charging method may include a magnetic resonance method, a magnetic induction method, or an electromagnetic wave method, and an additional circuit for charging wirelessly, for example, a circuit such as a coil loop, a resonant circuit, a rectifier, and the like may be added.

For example, the battery gauge may measure a remaining battery life of the battery 1396, a voltage, a current, or temperature during charging. The battery 1396 may store or generate electricity and may supply power to the electronic device 1301 by using stored or generated electricity. The battery 1396 may include a rechargeable battery or a solar battery.

The indicator 1397 may display a specific state of the electronic device 1301 or a part of it (for example, the AP 1310), for example, a booting state, a message state, or a charging state. The motor 1398 may convert an electric signal into a mechanical vibration. Although not shown, the electronic device 1301 may include a processing device (for example, a GPU) for supporting a mobile TV. The processing device for supporting the mobile TV may process media data according to standards such as Digital Multimedia Broadcasting (DMB), Digital Video Broadcasting (DVB), or media flow.

Each of the above-described elements of the electronic device according to various embodiments of the present disclosure may be comprised of one or more components, and the names of the elements may vary according to a kind of the electronic device. The electronic device according to various embodiments of the present disclosure may include at least one of the above-described elements, and some of the elements may be omitted or an additional element may be further included. In addition, some of the elements of the electronic device according to various embodiments of the present disclosure may be combined into a single entity, and may perform the same functions as those of the elements before being combined.

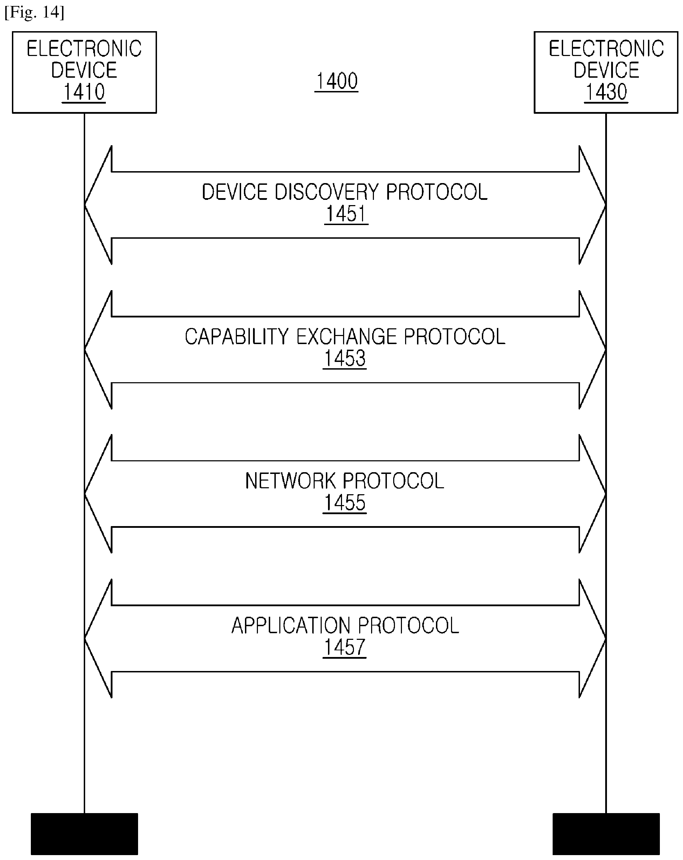

FIG. 14 illustrates a communication protocol 1400 between a plurality of electronic devices (e.g., a first electronic device 1410 and a second electronic device 1430) according to various embodiments.

Referring to FIG. 14, the communication protocol 1400 may include a device discovery protocol 1451, a capability exchange protocol 1453, a network protocol 1455, and an application protocol 1457.

According to an embodiment, the device discovery protocol 1451 may be a protocol for allowing the electronic device (e.g., the first electronic device 1410 or the second electronic device 1430) to detect external electronic devices which are communicable therewith or to connect with detected external electronic devices. For example, the first electronic device 1410 (e.g., the electronic device 101) may detect the second electronic device 1430 (e.g., the electronic device 104) as a device communicable with the first electronic device 1410 through a communication method usable in the first electronic device 1410 (e.g., WiFi, BT, USB, and the like) by using the device discovery protocol 1451. The first electronic device 1410 may acquire and store identification information of the detected second electronic device 1430 by using the device discovery protocol 1451 to communicate with the second electronic device 1430. The first electronic device 1410 may establish communication connection with the second electronic device 1430 based on at least the identification information.

According to an embodiment, the device discovery protocol 1451 may be a protocol for authenticating a plurality of electronic devices with one another. For example, the first electronic device 1410 may perform authentication between the first electronic device 1410 and the second electronic device 1430 based on communication information for connecting with at least the second electronic device 1430 (e.g., a MAC address, a Universally Unique Identifier (UUID), Subsystem Identification (SSID), and Internet Protocol (IP) address)).

According to an embodiment, the capability exchange protocol 1453 may be a protocol for exchanging information related to capability of a service which may be supported by at least one of the first electronic device 1410 and the second electronic device 1430. For example, the first electronic device 1410 and the second electronic device 1430 may exchange information related to capability of services currently provided by them with each other through the capability exchange protocol 1453. The exchangeable information may include identification information indicating a specific service from among a plurality of services which can be supported by the first electronic device 1410 and the second electronic device 1430. For example, the first electronic device 1410 may receive identification information of a specific service provided by the second electronic device 1430 from the second electronic device 1430 through the capability exchange protocol 1453. In this case, the first electronic device 1410 may determine whether the second electronic device 1410 can support the specific service based on the received identification information.

According to an embodiment, the network protocol 1455 may be a protocol for controlling a flow of data which is received and transmitted to provide a service between electronic devices connected with each other to communicate (e.g., the first electronic device 1410 and the second electronic device 1430). For example, at least one of the first electronic device 1410 and the second electronic device 1430 may control an error or a data quality by using the network protocol 1455. Additionally or alternatively, the network protocol 1455 may determine a transmission format of data which is transmitted and received between the first electronic device 1410 and the second electronic device 1430. In addition, at least one of the first electronic device 1410 and the second electronic device 1430 may manage at least session for exchanging data with each other by using the network protocol 1455 (e.g., connecting a session or finishing a session).

According to an embodiment, the application protocol 1457 may be a protocol for providing a procedure or information for exchanging data related to a service provided to an external electronic device. For example, the first electronic device 1410 (e.g., the electronic device 101) may provide a service to the second electronic device 1430 (e.g., the electronic device 104 or the server 106) through the application protocol 1457.

According to an embodiment, the communication protocol 1400 may include a standard communication protocol, a communication protocol designated by an individual or group (e.g., a communication protocol designated by a communication device manufacturer or a network provider), or a combination thereof.

The term "module" used in various embodiments of the present disclosure refers to a unit including one of hardware, software, and firmware, or a combination of two or more of them, for example. For example, the "module" may be used interchangeably with terms like unit, logic, logical block, component or circuit. The "module" may be a minimum unit of an integrally configured part or a part of it. The "module" may be a minimum unit that performs one or more functions or a part of it. The "module" may be implemented mechanically or electronically. For example, the "module" according to various embodiments of the present disclosure may include at least one of an Application Specific Integrated Circuit (ASIC), Field Programmable Gate Arrays (FPGAs), and a programmable logic device which perform any operation that is already well known or will be developed in the future.

According to various embodiments, at least part of the apparatus (e.g., modules or functions) or method (e.g., operations) of the present disclosure may be implemented by using instructions stored in a non-transitory computer-readable storage medium in the form of a programming module. When the instructions are executed by one or more processors (e.g., the processor 210), the one or more processors may perform a function corresponding to the instructions. The non-transitory computer-readable storage medium may be the memory 220, for example. At least part of the programming module may be implemented (e.g., executed) by using the processor 210. At least part of the programming module may include a module, a program, a routine, sets of instructions, a process, and the like for performing one or more functions.

Examples of the non-transitory computer-readable recording medium include magnetic media such as hard disks, floppy disks and magnetic tapes, optical media such as Compact Disc ROMs (CD-ROMs) and DVDs, magneto-optical media such as floptical disks, and hardware devices such as ROMs, RAMs and flash memories that are especially configured to store and execute program commands (e.g., the programming module). Examples of the program commands include machine language codes created by a compiler, and high-level language codes that can be executed by a computer by using an interpreter. The above-described hardware devices may be configured to operate as one or more software modules for performing operations of the present disclosure, and vice versa.

A module or programming module of the present disclosure may include one or more of the above-described elements, may omit some elements, or may further include additional elements. The operations performed by the module, the programming module, or the other elements according to the present disclosure may be performed serially, in parallel, repeatedly, or heuristically. In addition, some operation may be performed in different order or may be omitted, and an additional operation may be added.

According to various embodiments, the instructions stored in a storage medium are set to control at least one processor to perform at least one operation when the instructions are executed by the at least one processor. The at least one operation may include: sensing situation information related to an electronic device; based on the situation information, communicating with a first external device for the electronic device; based on communication with the first external device, acquiring connection information corresponding to at least one of the first external device or a second external device communicating with the first external device; and providing the connection information to a third external device communicating with the electronic device such that one of the first external device or the second external device that corresponds to the connection information and the third external device directly communicate with each other.

The method and apparatus for connecting communication of electronic devices according to various embodiments of the present disclosure can connect communication with the other electronic device through an electronic device (e.g., an auxiliary electronic device) connected with an electronic device, and thus can easily share data with the other electronic device.

While the present disclosure has been shown and described with reference to various embodiments thereof, it will be understood by those skilled in the art that various changes in form and details may be made therein without departing from the scope of the present disclosure as defined by the appended claims.

## Claims

1. A method of an electronic device (210), the method comprising:
identifying situation information related to the electronic device (210), the situation information comprising at least one of a sound, a vibration, an image, or a motion of the electronic device, wherein the sound, the vibration, and the image are sensed in the electronic device;
communicating, based on the situation information, with a first external device (230) using a first communication method;
acquiring, based on the communication with the first external device (230), connection information associated with a second external device (220), the second external device (220) communicating with the first external device (230) using a second communication method; and
providing the connection information to a third external device (200) such that the second external device (230) and the third external device (200) subsequently directly communicate with each other based on the connection information using a third communication method, the third external device (200) communicating with the electronic device (210) using the second communication method.

2. The method of claim 1, wherein the identifying comprises identifying at least one of the motion of the electronic device , the vibration, the sound, or the image acquired from an external source of the electronic device (210), as the situation information.

3. The method of claim 1, wherein the identifying comprises detecting a predetermined gesture occurring within a predetermined distance of the electronic device (210).

4. The method of claim 1, wherein the communicating with the first external device (230) comprises, when the situation information comprises information specified in the electronic device (210), activating a communication module functionally connected with the electronic device (210).

5. The method of claim 1, wherein the first communication method, the second communication method, and the third communication method are different from each other.

6. The method of claim 4, wherein the first communication method is different from the second communication method or the third communication method.

7. The method of claim 1, wherein the providing comprises providing, by the electronic device (210), connection information associated with the third external device to the first external device (230).

8. The method of claim 1, wherein the connection information comprises at least one of a Media Access Control, MAC, address, a Service Set Identifier, SSID, a Basic SSID, a device identifier, a Universally Unique Identifier, UUID, a Subsystem Identifier, and an Internet Protocol, IP, address.

9. The method of claim 1, wherein the communication with each of the first and second external devices is performed with at least one of WiFi, BLUETOOTH, BLUETOOTH-Low Energy, BLE, and Near Field Communication, NFC.

10. The method of claim 1, wherein the direct communication comprises sharing of predetermined data.

11. The method of claim 1, wherein the direct communication comprises requesting permission to share specific data and sharing the specific data for which the permission is granted.

12. An electronic device (200) comprising:
a communication module (206); and
at least one processor (202),
wherein the processor (202) is configured to:
acquire, using the communication module (206), connection information associated with a third external device (220) from the first external device (210), wherein the third external device (220) is specified by a second external device (230) communicating with the first external device (210), and
make, using the communication module (206), the electronic device (200) directly communicate with the third external device (220) based on the connection information,
wherein the first external device (210) communicates with the second external device (220) using a first communication method, the electronic device (200) communicates with the first external device (210) using a second communication method, and the electronic device (200) communicates with the third external device (220) using a third communication method, and
wherein the connection information is received at the first external device (210) from the second external device (230) based on situation information, related to the first external device (210), which is acquired in the first external device (210).

13. The electronic device of claim 12, wherein the first communication method, the second communication method, and the third communication method are different from each other.

14. The electronic device of claim 12, wherein the first communication method is different from the second communication method or the third communication method.

15. The electronic device of claim 12, wherein the processor is configured to perform sharing of predetermined data after make the electronic device directly communicate with the third external device by using the connection information.

## Patentansprüche

1. Verfahren einer elektronischen Vorrichtung (210), wobei das Verfahren umfasst:
ein Identifizieren von Situationsinformationen, die sich auf die elektronische Vorrichtung (210) beziehen, wobei die Situationsinformationen einen Ton, eine Vibration, ein Bild und/oder eine Bewegung der elektronischen Vorrichtung umfassen, wobei der Ton, die Vibration und das Bild in der elektronischen Vorrichtung erkannt werden;
ein Kommunizieren auf Grundlage der Situationsinformationen mit einer ersten externen Vorrichtung (230) unter Verwendung eines ersten Kommunikationsverfahrens;
ein Erhalten auf Grundlage der Kommunikation mit der ersten externen Vorrichtung (230) von Verbindungsinformationen, die einer zweiten externen Vorrichtung (220) zugeordnet sind, wobei die zweite externe Vorrichtung (220) mit der ersten externen Vorrichtung (230) unter Verwendung eines zweiten Kommunikationsverfahrens kommuniziert; und
ein Bereitstellen der Verbindungsinformationen an eine dritte externe Vorrichtung (200) derart, dass die zweite externe Vorrichtung (230) und die dritte externe Vorrichtung (200) anschließend auf Grundlage der Verbindungsinformationen unter Verwendung eines dritten Kommunikationsverfahrens direkt miteinander kommunizieren, wobei die dritte externe Vorrichtung (200) mit der elektronischen Vorrichtung (210) unter Verwendung des zweiten Kommunikationsverfahrens kommuniziert.

2. Verfahren nach Anspruch 1, wobei das Identifizieren das Identifizieren der Bewegungen der elektronischen Vorrichtung, der Vibration, des Tons und/oder des Bildes, das von einer externen Quelle der elektronischen Vorrichtung (210) erhalten wird, als Situationsinformationen umfasst.

3. Verfahren nach Anspruch 1, wobei das Identifizieren ein Erfassen einer vorbestimmten Geste umfasst, die innerhalb einer vorbestimmten Entfernung der elektronischen Vorrichtung (210) auftritt.

4. Verfahren nach Anspruch 1, wobei das Kommunizieren mit der ersten externen Vorrichtung (230) ein Aktivieren eines Kommunikationsmoduls umfasst, das funktional mit der elektronischen Vorrichtung (210) verbunden ist, wenn die Situationsinformationen Informationen umfassen, die in der elektronischen Vorrichtung (210) spezifiziert sind.

5. Verfahren nach Anspruch 1, wobei sich das erste Kommunikationsverfahren, das zweite Kommunikationsverfahren und das dritte Kommunikationsverfahren voneinander unterscheiden.

6. Verfahren nach Anspruch 4, wobei sich das erste Kommunikationsverfahren von dem zweiten Kommunikationsverfahren oder dem dritten Kommunikationsverfahren unterscheidet.

7. Verfahren nach Anspruch 1, wobei das Bereitstellen das Bereitstellen von Verbindungsinformationen, die der dritten externen Vorrichtung zugeordnet sind, an die erste externe Vorrichtung (230) durch die elektronische Vorrichtung (210) umfasst.

8. Verfahren nach Anspruch 1, wobei die Verbindungsinformationen eine Media Access Control Adresse (MAC-Adresse), einen Service Set Identifier (SSID), einen Basic SSID, einen Vorrichtungsbezeichner, einen Universally Unique Identifier (UUID), einen Subsystem Identifier und/oder eine Internetprotokolladresse (IP-Adresse) umfasst.

9. Verfahren nach Anspruch 1, wobei die Kommunikation mit jeweils der ersten und der zweiten externen Vorrichtung mit Wi-Fi, BLUETOOTH, BLUETOOTH-Low Energy (BLE) und/oder Nahfeldkommunikation (Near Field Communication - NFC) durchgeführt wird.

10. Verfahren nach Anspruch 1, wobei die direkte Kommunikation ein Teilen vorbestimmter Daten umfasst.

11. Verfahren nach Anspruch 1, wobei die direkte Kommunikation ein Anfordern einer Erlaubnis zum Teilen spezifischer Daten und das Teilen der spezifischen Daten, für die die Erlaubnis erteilt wird, umfasst.

12. Elektronische Vorrichtung (200), die umfasst:
ein Kommunikationsmodul (206); und
wenigstens einen Prozessor (202), wobei der Prozessor (202) konfiguriert ist zum:
Erhalten unter Verwendung des Kommunikationsmoduls (206) von Verbindungsinformationen, die einer dritten externen Vorrichtung (220) zugeordnet sind, von der ersten externen Vorrichtung (210), wobei die dritte externe Vorrichtung (220) durch eine zweite externe Vorrichtung (230) spezifiziert ist, die mit der ersten externen Vorrichtung (210) kommuniziert, und
unter Verwendung des Kommunikationsmoduls (206), Kommunizieren lassen der elektronischen Vorrichtung (200) auf Grundlage der Verbindungsinformationen direkt mit der dritten externen Vorrichtung (220),
wobei die erste externe Vorrichtung (210) mit der zweiten externen Vorrichtung (220) unter Verwendung eines ersten Kommunikationsverfahrens kommuniziert, die elektronische Vorrichtung (200) mit der ersten externen Vorrichtung (210) unter Verwendung eines zweiten Kommunikationsverfahrens kommuniziert und die elektronische Vorrichtung (200) unter Verwendung eines dritten Kommunikationsverfahrens mit der dritten externen Vorrichtung (220) kommuniziert und
wobei die Verbindungsinformationen an der ersten externen Vorrichtung (210) von der zweiten externen Vorrichtung (230) auf Grundlage von sich auf die erste externe Vorrichtung (210) beziehenden Situationsinformationen empfangen werden, die in der ersten externen Vorrichtung (210) erfasst werden.

13. Elektronische Vorrichtung nach Anspruch 12, wobei sich das erste Kommunikationsverfahren, das zweite Kommunikationsverfahren und das dritte Kommunikationsverfahren voneinander unterscheiden.

14. Elektronische Vorrichtung nach Anspruch 12, wobei sich das erste Kommunikationsverfahren von dem zweiten Kommunikationsverfahren oder dem dritten Kommunikationsverfahren unterscheidet.

15. Elektronische Vorrichtung nach Anspruch 12, wobei der Prozessor konfiguriert ist, um das Teilen vorbestimmter Daten durchzuführen, nachdem er die elektronische Vorrichtung unter Verwendung der Verbindungsinformationen direkt mit der dritten externen Vorrichtung kommunizieren gelassen hat.

## Revendications

1. Procédé d'un dispositif électronique (210), le procédé comprenant :
l'identification des informations de situation relatives au dispositif électronique (210), les informations de situation comprenant au moins l'un d'un son, d'une vibration, d'une image ou d'un mouvement du dispositif électronique, ledit son, ladite vibration et ladite image étant détectés dans le dispositif électronique ;
la communication, sur la base des informations de situation, avec un premier dispositif externe (230) à l'aide d'un premier procédé de communication ;
l'acquisition, sur la base de la communication avec le premier dispositif externe (230), des informations de connexion associées à un deuxième dispositif externe (220), le deuxième dispositif externe (220) communiquant avec le premier dispositif externe (230) à l'aide d'un deuxième procédé de communication ; et
la fourniture des informations de connexion à un troisième dispositif externe (200) de sorte que le deuxième dispositif externe (230) et le troisième dispositif externe (200) communiquent ensuite directement l'un avec l'autre sur la base des informations de connexion à l'aide d'un troisième procédé de communication, le troisième dispositif externe (200) communiquant avec le dispositif électronique (210) à l'aide du deuxième procédé de communication.

2. Procédé selon la revendication 1, ladite identification comprenant l'identification d'au moins l'un des mouvements du dispositif électronique, de la vibration, du son ou de l'image acquis à partir d'une source externe du dispositif électronique (210), en tant qu'informations de situation.

3. Procédé selon la revendication 1, ladite identification comprenant la détection d'un geste prédéfini se produisant dans les limites d'une distance prédéfinie du dispositif électronique (210).

4. Procédé selon la revendication 1, ladite communication avec le premier dispositif externe (230) comprenant, lorsque les informations de situation comprennent des informations spécifiées dans le dispositif électronique (210), l'activation d'un module de communication fonctionnellement connecté au dispositif électronique (210).

5. Procédé selon la revendication 1, ledit premier procédé de communication, ledit deuxième procédé de communication et ledit troisième procédé de communication étant différents l'un de l'autre.

6. Procédé selon la revendication 4, ledit premier procédé de communication étant différent du deuxième procédé de communication ou du troisième procédé de communication.

7. Procédé selon la revendication 1, ladite fourniture comprenant la fourniture au premier dispositif externe (230), par le dispositif électronique (210), d'informations de connexion associées au troisième dispositif externe.

8. Procédé selon la revendication 1, lesdites informations de connexion comprenant au moins l'un d'une adresse de commande d'accès au support (MAC), d'un identifiant de réseau sans fil (SSID), d'un SSID de base, d'un identifiant de dispositif, d'un identifiant universel unique (UUID), d'un identifiant de sous-système, et d'une adresse de protocole internet (IP).

9. Procédé selon la revendication 1, ladite communication avec chacun des premier et deuxième dispositifs externes étant effectuée avec au moins l'un du WiFi, du BLUETOOTH, du BLUETOOTH à basse consommation (BLE) et de la communication en champ proche (NFC).

10. Procédé selon la revendication 1, ladite communication directe comprenant le partage de données prédéfinies.

11. Procédé selon la revendication 1, ladite communication directe comprenant la demande d'autorisation de partager des données spécifiques et le partage des données spécifiques pour lesquelles l'autorisation est accordée.

12. Dispositif électronique (200) comprenant :
un module de communication (206) ; et
au moins un processeur (202), ledit processeur (202) étant configuré pour :
acquérir, à l'aide du module de communication (206), des informations de connexion associées à un troisième dispositif externe (220) à partir du premier dispositif externe (210), ledit troisième dispositif externe (220) étant spécifié par un deuxième dispositif externe (230) communiquant avec le premier dispositif externe (210), et amener, à l'aide du module de communication (206), le dispositif électronique (200) à communiquer directement avec le troisième dispositif externe (220) sur la base des informations de connexion, ledit premier dispositif externe (210) communiquant avec le deuxième dispositif externe (220) à l'aide d'un premier procédé de communication, ledit dispositif électronique (200) communiquant avec le premier dispositif externe (210) à l'aide d'un deuxième procédé de communication, et ledit dispositif électronique (200) communiquant avec le troisième dispositif externe (220) à l'aide d'un troisième procédé de communication, et lesdites informations de connexion étant reçues au niveau du premier dispositif externe (210) en provenance du deuxième dispositif externe (230) sur la base des informations de situation, liées au premier dispositif externe (210), qui sont acquises dans le premier dispositif externe (210).

13. Dispositif électronique selon la revendication 12, ledit premier procédé de communication, ledit deuxième procédé de communication et ledit troisième procédé de communication étant différents les uns des autres.

14. Dispositif électronique selon la revendication 12, ledit premier procédé de communication étant différent du deuxième procédé de communication ou du troisième procédé de communication.

15. Dispositif électronique selon la revendication 12, ledit processeur étant configuré pour effectuer le partage de données prédéfinies après avoir amené le dispositif électronique à communiquer directement avec le troisième dispositif externe à l'aide des informations de connexion.
